# EUROPEAN PATENT SPECIFICATION

(11) **EP 4 203 343 B1**
(45) Date of publication and mention of the grant of the patent: **28.10.2026**
(21) Application number: 20951332.4
(22) Date of filing: 24.08.2020
(51) Int. Cl.: H04J 14/02

(54) **OPTICAL COMMUNICATION SYSTEM AND PROTECTION METHOD FOR OPTICAL COMMUNICATION SYSTEM**
OPTISCHES KOMMUNIKATIONSSYSTEM UND SCHUTZVERFAHREN FÜR EIN OPTISCHES KOMMUNIKATIONSSYSTEM
SYSTÈME DE COMMUNICATION OPTIQUE ET PROCÉDÉ DE PROTECTION POUR UN SYSTÈME DE COMMUNICATION OPTIQUE

(43) Date of publication of application: 28.06.2023
(73) Proprietor: NTT, Inc., Tokyo 100-8116 (JP)
(72) Inventor: KANEKO, Shin, Musashino-shi, Tokyo 180-8585 (JP); HONDA, Kazuaki, Musashino-shi, Tokyo 180-8585 (JP); SUZUKI, Hiroo, Musashino-shi, Tokyo 180-8585 (JP); KANI, Junichi, Musashino-shi, Tokyo 180-8585 (JP); KANAI, Takuya, Musashino-shi, Tokyo 180-8585 (JP); TANAKA, Yasunari, Musashino-shi, Tokyo 180-8585 (JP)
(74) Representative: Hoffmann Eitle
(86) International application number: PCT/JP2020/031844
(87) International publication number: WO 2022/044076

(56) References cited:
- EP-A1- 2 525 517
- WO-A1-2015/060325
- WO-A1-2016/013616
- JP-A- 2018 023 075
- US-A- 5 777 761
- US-A1- 2012 251 108

## Description

### [Technical Field]

The present invention relates to an optical communication system and a protection method for the optical communication system.

### [Background Art]

In an optical communication system and a protection method for an optical communication system, it is known that an optical fiber transmission path to be used from a normal path to a redundant path by making an optical fiber between a wavelength routing device on a master station side and an optical branching device on the slave station side redundant and changing a wavelength of an optical signal to be transmitted and received between a wavelength variable communication device and a wavelength variable subscriber device in a WDM (Wavelength Division Multiplexing)-PON which is a kind of PON (Passive Optical Network) in which a wavelength multiplexed optical signal is communicated between a wavelength variable communication device on the master station side and a wavelength variable subscriber device on the slave station side (see NPL 1).

### [Citation List]

### [Non Patent Literature]

[NPL 1] K. Honda et al., "Wavelength-shifted protection for WDM-PON with AMCC scheme for 5G mobile fronthaul", OFC 2019.

### [Patent Literature]

US 5777761 A1 refers to photonic facility and line protection switching in an optical network for fault tolerant operation. If the controller determines an optical transmission line in a signal path has failed, the controller will re-route the signal path through a spare or protect component. Alternatively, the controller can re-route the signal path through a frequency translator and another optical transmission line.

EP 2525517 A1 refers to optical wavelength division Multiplex transmission in an optical network. A central node and a group of basic tunable optical transmitters is provided. A protection control unit detects a failure within a working path or a protection path and provides for switching the central node tunable optical transmitters from a present working mode to another mode.

### [Summary of Invention]

### [Technical Problem]

However, in the optical communication system and the protection method for the optical communication system as shown in PTL 1, a redundant section is only an optical fiber transmission path connecting the wavelength routing device on the master station side and the optical branching device on the slave station side, and only protection against disconnection of the core wire of the optical fiber can be realized. Therefore, when the wavelength variable communication device is disabled such as failure, function upgrade, maintenance or the like of the wavelength variable communication device, the opposite wavelength variable subscriber device is not in communication for a long time.

The present disclosure was achieved to solve the foregoing problem. The object is to provide the optical communication system and the protection method for the optical communication system, which can cope with a disconnection due to an abnormality or the like of both the wavelength variable communication device and the optical fiber transmission path and shorten the time required for communication restart between the wavelength variable communication device and the facing wavelength variable subscriber device in any cases of when the wavelength variable communication device is single-unit disabled, the optical fiber transmission path is single-unit disabled, or the wavelength variable communication device and the optical fiber transmission path are multiple disabled.

### [Solution to Problem]

The object of the invention is solved by the subject matter of the independent claims. Advantageous embodiments of the invention are disclosed in the dependent claims. An optical communication system according to an example includes a plurality of wavelength variable communication devices capable of changing a wavelength of an optical signal to be transmitted, a plurality of wavelength variable subscriber devices capable of changing a wavelength of an optical signal to be transmitted and received, a wavelength routing device connected to each of the wavelength variable communication devices, an optical branching device connected to each of the wavelength variable subscriber devices, a plurality of optical fiber transmission paths connecting the wavelength routing device and the optical multiplexing/demultiplexing device, and an optical distribution device provided between the wavelength routing device and the optical multiplexing/demultiplexing device, wherein the wavelength routing device outputs an optical signal inputted from a port on the wavelength variable subscriber device side to a port uniquely determined by a combination of a wavelength of the optical signal and a port to which the optical signal is inputted, the wavelength variable subscriber device is capable of executing a first protection for switching a wavelength of the optical signal to be transmitted and received to a spare wavelength different from an operating wavelength when the wavelength variable subscriber device and the wavelength variable communication device are disconnected, and the optical distribution device is capable of executing a second protection for switching the optical fiber transmission path to be used when the wavelength variable subscriber device and the wavelength variable communication device are disconnected.

Alternatively, the optical communication system according to an example includes the plurality of wavelength variable communication devices capable of changing the wavelength of then optical signal to be transmitted, the plurality of wavelength variable subscriber devices capable of changing the wavelength of the optical signal to be transmitted and received, the wavelength routing device connected to each of the wavelength variable communication devices, the optical branching device connected to each of the wavelength variable subscriber devices, the plurality of optical fiber transmission paths connecting the wavelength routing device and the optical multiplexing/demultiplexing device, and the optical distribution device provided between the wavelength routing device and each of the wavelength variable communication devices, wherein the wavelength routing device outputs the optical signal inputted from the port on the wavelength variable subscriber device side to the port uniquely determined by a combination of the wavelength of the optical signal and the port to which the optical signal is inputted, the wavelength variable subscriber device is capable of executing the first protection for switching the wavelength of the optical signal to be transmitted and received to the spare wavelength different from the operating wavelength when the wavelength variable subscriber device and the wavelength variable communication device are disconnected, and the optical distribution device is capable of executing the second protection for switching the connection destination of the wavelength variable subscriber device to the wavelength variable communication device different from the disconnected wavelength variable communication device when the wavelength variable subscriber device and the wavelength variable communication device are disconnected.

Alternatively, the optical communication system according to an example includes the plurality of wavelength variable communication devices capable of changing the wavelength of the optical signal to be transmitted, the plurality of wavelength variable subscriber devices capable of changing the wavelength of the optical signal to be transmitted and received, a first wavelength routing device connected to each of the wavelength variable communication devices, a second wavelength routing device connected to each of the wavelength variable subscriber devices, the plurality of optical fiber transmission paths connecting the first wavelength routing devices and the second wavelength routing devices, and the optical distribution device provided between the first wavelength routing device and each of the wavelength variable communication devices, wherein the first wavelength routing device outputs an optical signal inputted from the port on the wavelength variable subscriber device side to the port uniquely determined by a combination of the wavelength of the optical signal and the port to which the optical signal is inputted, the second wavelength routing device outputs the optical signal inputted from the port on the wavelength variable communication device side to the port uniquely determined by a combination of the wavelength of the optical signal and the port to which the optical signal is inputted, and the wavelength variable subscriber device, the wavelength variable communication device are capable of executing the first protection for switching the wavelength of the respective optical signal to be transmitted and received to the spare wavelength different from the operating wavelength when the wavelength variable subscriber device and the wavelength variable communication device are disconnected, and the optical distribution device is capable of executing the second protection for switching the connection destination of the wavelength variable subscriber device to the wavelength variable communication device different from the disconnected wavelength variable communication device when the wavelength variable subscriber device and the wavelength variable communication device are disconnected.

In addition, a protection method for the optical communication system according to an example includes the plurality of wavelength variable communication devices capable of changing the wavelength of the optical signal to be transmitted, the plurality of wavelength variable subscriber devices capable of changing the wavelength of the optical signal to be transmitted and received, the wavelength routing device connected to each of the wavelength variable communication devices, the optical branching device connected to each of the wavelength variable subscriber devices, the plurality of optical fiber transmission paths connecting the wavelength routing device and the optical multiplexing/demultiplexing device, and the optical distribution device provided between the wavelength routing device and the optical multiplexing/demultiplexing device, wherein the wavelength routing device executes, in an arbitrary order, in the optical communication system in which the optical signal inputted from the port of the wavelength variable subscriber device side is output to the port uniquely determined by a combination of the wavelength of the optical signal and the port to which the optical signal is inputted, a first step in which the wavelength variable subscriber device switches the wavelength of the optical signal to be transmitted and received to the spare wavelength different from the operating wavelength when the wavelength variable subscriber device and the wavelength variable communication device are disconnected, and a second step in which the optical distribution device switches the optical fiber transmission path to be used when the wavelength variable subscriber device and the wavelength variable communication device are disconnected.

Alternatively, the protection method for the optical communication system according to an example includes the plurality of wavelength variable communication devices capable of changing the wavelength of the optical signal to be transmitted, the plurality of wavelength variable subscriber devices capable of changing the wavelength of the optical signal to be transmitted and received, the wavelength routing device connected to each of the wavelength variable communication devices, the optical branching device connected to each of the wavelength variable subscriber devices, the plurality of optical fiber transmission paths connecting the wavelength routing device and the optical multiplexing/demultiplexing device, and the optical distribution device provided between the wavelength routing device and each of wavelength variable communication devices, wherein the wavelength routing device executes, in an arbitrary order, in the optical communication system in which the optical signal inputted from the port of the wavelength variable subscriber device side is output to the port uniquely determined by a combination of the wavelength of the optical signal and the port to which the optical signal is inputted, a first step in which the wavelength variable subscriber device switches the wavelength of the optical signal to be transmitted and received to the spare wavelength different from the operating wavelength when the wavelength variable subscriber device and the wavelength variable communication device are disconnected, and a second step in which the optical distribution device switches the connection destination of the wavelength variable subscriber device to the wavelength variable communication device different from the disconnected wavelength variable communication device when the wavelength variable subscriber device and the wavelength variable communication device are disconnected.

Alternatively, the protection method for the optical communication system according to's an example includes the plurality of wavelength variable communication devices capable of changing the wavelength of the optical signal to be transmitted, the plurality of wavelength variable subscriber devices capable of changing the wavelength of the optical signal to be transmitted and received, the first wavelength routing device connected to each of the wavelength variable communication devices, the second wavelength routing device connected to each of the wavelength variable subscriber devices, the plurality of optical fiber transmission paths connecting the first wavelength routing device and the second wavelength routing device, and the optical distribution device provided between the first wavelength routing device and each of wavelength variable communication devices, wherein in the optical communication system in which the first routing device outputs the optical signal inputted from the port of the wavelength variable subscriber device side to the port uniquely determined by a combination of a wavelength of the optical signal and the port to which the optical signal is inputted and the second routing device outputs the optical signal inputted from the port of the wavelength variable communication device side to the port uniquely determined by a combination of a wavelength of the optical signal and a port to which the optical signal is inputted, the wavelength variable subscriber device and the wavelength variable communication device executes, in an arbitrary order, the first step in which the wavelength variable subscriber device and the wavelength variable communication device switch the optical signal transmitted by each of the wavelength variable subscriber devices and the wavelength variable communication devices to the spare wavelength different from the operating wavelength when the wavelength variable subscriber device and the wavelength variable communication device are disconnected, and the second step in which the optical distribution device switches the connection destination of the wavelength variable subscriber device to the wavelength variable communication device different from the disconnected wavelength variable communication device when the wavelength variable subscriber device and the wavelength variable communication device are disconnected.

### [Advantageous Effects of Invention]

According to the optical communication system and the protection method for the optical communication system of the present disclosure, in any cases of when the wavelength variable communication device is single-unit disabled, the optical fiber transmission path is single-unit disabled, or the wavelength variable communication device and the optical fiber transmission path are multiple disabled, the time required for communication restart between the wavelength variable communication device and the facing wavelength variable subscriber device can be shortened.

### [Brief Description of Drawings]

[Fig. 1]

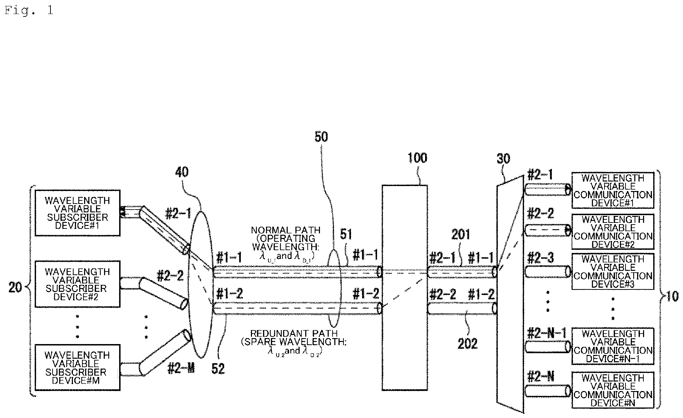

   Fig. 1 is a diagram schematically showing an entire configuration of an optical communication system according to a first embodiment.
[Fig. 2]

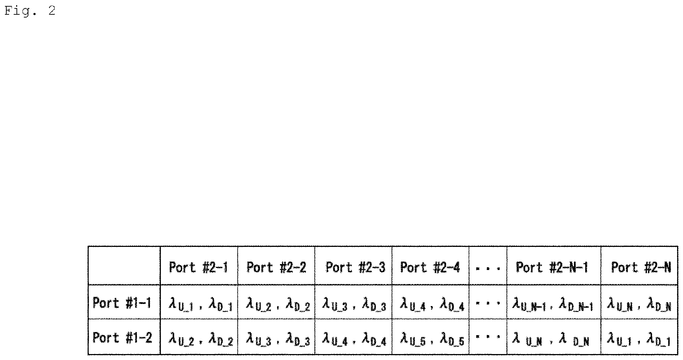

   Fig. 2 is a diagram showing an example of input/output characteristics of the wavelength routing device provided in the optical communication system according to the first embodiment.
[Fig. 3]

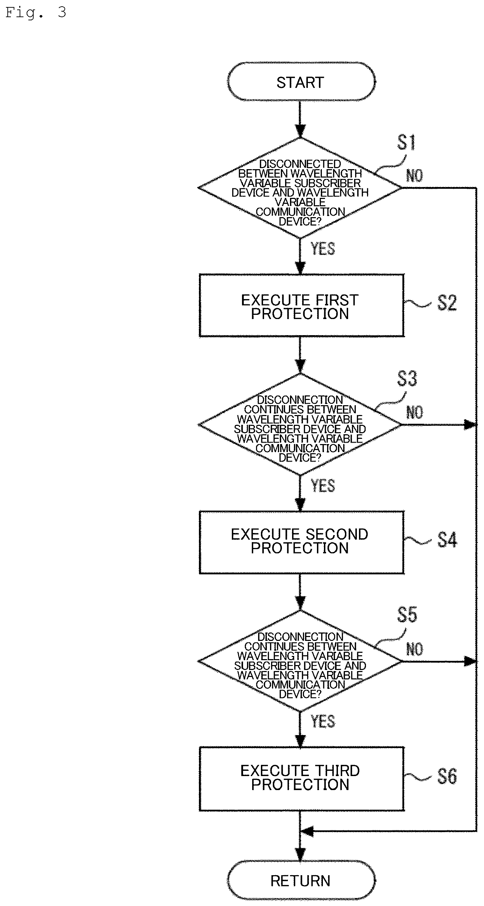

   Fig. 3 is a diagram showing an example of an operation of the optical communication system according to the first embodiment.
[Fig. 4]

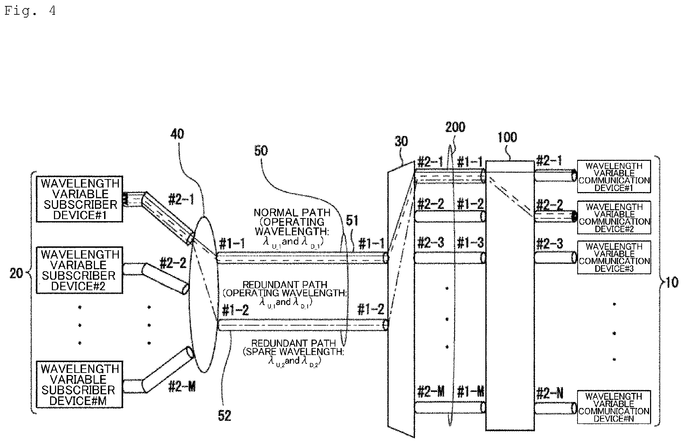

   Fig. 4 is a diagram schematically showing an entire configuration of an optical communication system according to a second embodiment.
[Fig. 5]

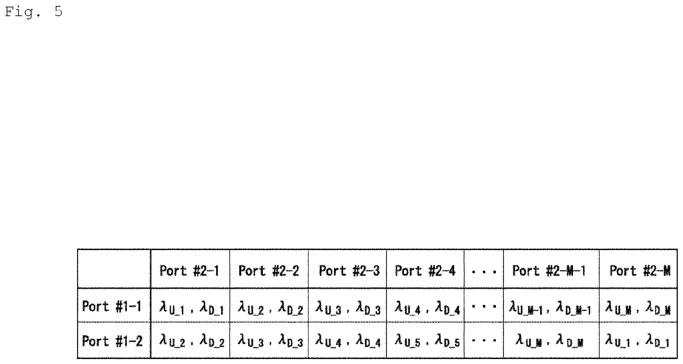

   Fig. 5 is a diagram showing an example of input/output characteristics of the wavelength routing device provided in the optical communication system according to the second embodiment.
[Fig. 6]

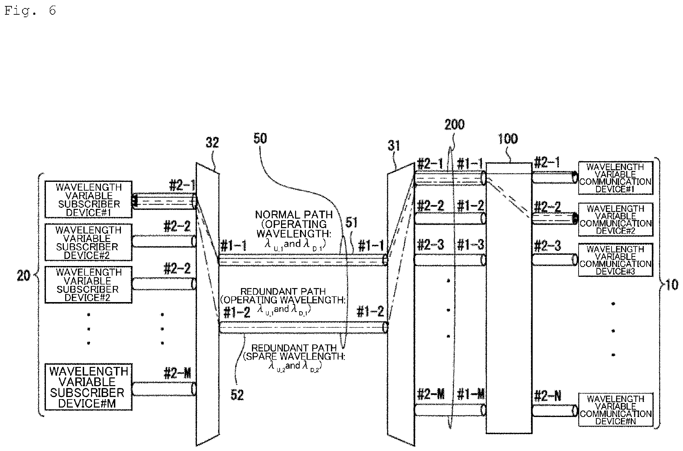

   Fig. 6 is a diagram schematically showing an entire configuration of an optical communication system according to a third embodiment.

### [Description of Embodiments]

Modes for carrying out the optical communication system and the protection method for the optical communication system according to the present disclosure will be described with reference to the drawings. In each figure, same numerals are assigned to identical or corresponding parts and repetition of description will be simplified or omitted. In the following description, for convenience, the positional relationship of each structure may be expressed with reference to the state shown in the figure. It should be noted that the present disclosure includes any combination of the below embodiments.

### First Embodiment

Embodiment 1 of the present disclosure will be described with reference to Figs. 1 to 3. Fig. 1 is a diagram schematically showing an entire configuration of the optical communication system. Fig. 2 is a diagram showing an example of input/output characteristics of the wavelength routing device provided in the optical communication system. Fig. 3 is a diagram showing an example of an operation of the optical communication system.

The optical communication system according to this embodiment is a communication system for communicating an optical signal between the wavelength variable communication device 10 and the wavelength variable subscriber device 20. As shown in Fig. 1, the optical communication system includes the plurality of wavelength variable communication devices 10 and the plurality of wavelength variable subscriber devices 20. In the shown example, N sets of wavelength variable communication devices 10 are provided. M sets of wavelength variable subscriber devices 20 are provided. N and M are integers that are 2 or more.

In order to distinguish the respective wavelength variable communication devices 10, serial numbers are assigned to the respective wavelength variable communication devices 10 for convenience, and the respective wavelength variable communication devices 10 are assigned to the wavelength variable communication devices 10#1, the wavelength variable communication device 10#2, ..., the wavelength variable communication device 10#N-1, the wavelength variable communication device 10#N. Similarly, in order to distinguish each wavelength variable subscriber device 20, serial numbers are assigned to the respective wavelength variable subscriber devices 20 for convenience, and the respective wavelength variable subscriber devices 20 are assigned to the wavelength variable subscriber device 20#1, the wavelength variable subscriber device 20#2, ..., the wavelength variable subscriber device 20#M-1, the wavelength variable subscriber device 20#M.

Each of the wavelength variable communication devices 10 is connected to, for example, one common master station device (not shown). Each of the wavelength variable subscriber devices 20 is connected to, for example, a respective slave station device (not shown).

In this embodiment, each of the wavelength variable communication devices 10 can change the wavelength of an optical signal to be transmitted toward the wavelength variable subscriber device 20. Each wavelength variable communication device 10 can receive an optical signal of a preset specific wavelength. Here, it is assumed that the wavelength of the optical signal to be transmitted by the wavelength variable communication device 10#1 is set to AD_1, and the wavelength of the optical signal receivable by the wavelength variable communication device 10#1 is λU_1. Similarly, it is assumed that the wavelength of the optical signal to be transmitted by the wavelength variable communication device 10#2 is set to λD_2, and the wavelength of the optical signal receivable by the wavelength variable communication device 10#2 is set to λU_2. Then, itis assumed that the wavelength of the optical signal to be transmitted by the wavelength variable communication device 10#N is set to λD_N, and the wavelength of the optical signal receivable by the wavelength variable communication device 10#N is set to AU N.

Each wavelength variable subscriber device 20 can change the wavelength of the optical signal to be transmitted and received. That is, each wavelength variable subscriber device 20 can change the wavelength of the optical signal to be transmitted toward the wavelength variable communication device 10. Each wavelength variable subscriber device 20 can change the wavelength of the optical signal to be received. That is, each wavelength variable subscriber device 20 selectively receives signal light of one wavelength channel from a wavelength multiplexed signal (WDM signal) obtained by multiplexing a plurality of wavelength channels. Then, each wavelength variable subscriber device 20 can change and set a wavelength channel to be selectively received. Here, for example, it is assumed that the operating wavelength of the wavelength variable subscriber device 20#1 is λU_1 in the upward direction and λD_1 in the downward direction. In the same way, the operating wavelength is set for the other wavelength variable subscriber devices 20.

The optical communication system includes a wavelength routing device 30, an optical branching device 40, and an optical fiber transmission path 50. The wavelength variable communication device 10 and the wavelength variable subscriber device 20 are communicably connected through the wavelength routing device 30, the optical branching device 40 and the optical fiber transmission path 50. The wavelength routing device 30 is connected to each wavelength variable communication device 10. The optical branching device 40 is connected to each wavelength variable subscriber device 20. The wavelength routing device 30 and the optical branching device 40 are connected by the plurality of optical fiber transmission paths 50. In the example of the configuration described here, two of a normal path 51 and a redundant path 52 are laid as the plurality of optical fiber transmission paths 50.

The optical communication system further includes an optical distribution device 100. In this embodiment, the optical distribution device 100 is provided between the wavelength routing device 30 and the optical branching device 40. A port on the wavelength variable communication device 10 side of the optical distribution device 100 is connected to the wavelength routing device 30 via a first signal transmission path 201 and a second signal transmission path 202 which are signal transmission paths 200. That is, the wavelength routing device 30 and the optical distribution device 100 are connected by the plurality of signal transmission paths 200. The normal path 51 and the redundant path 52, which are the plurality of optical fiber transmission paths 50, are connected to a port on the wavelength variable subscriber device 20 side of the optical distribution device 100.

In the shown example of the configuration, for the wavelength variable communication device 10 side of the optical branching device 40, the port #1-1 is connected to the normal path 51 of the optical fiber transmission path 50, and the port #1-2 is connected to the redundant path 52 of the optical fiber transmission path 50. Further, ports #2-1, #2-2, ..., #2-M on the wavelength variable subscriber device 20 side in the optical branching device 40 are connected to the wavelength variable subscriber device 20#1, the wavelength variable subscriber device 20#2, ..., the wavelength variable subscriber device 20#M, respectively.

Then, the optical branching device 40 branches the light inputted from the one side port and outputs it to each of the opposite side ports. For example, the light inputted to the port #1-1 of the optical branching device 40 is branched regardless of the wavelength and outputted to each port of #2-1 to #2-M. The light inputted to the port #2-1 of the optical branching device 40 is branched regardless of the wavelength and outputted to each port of #1-1 or #1-2.

In the shown example of the configuration, for the wavelength variable subscriber device 20 side of the optical distribution device 100, the port #1-1 is connected to the normal path 51 of the optical fiber transmission path 50, and the port #1-2 is connected to the redundant path 52 of the optical fiber transmission path 50. For the wavelength variable communication device 10 side of the optical distribution device 100, the first signal transmission path 201 is connected to the port #2-1, and the second signal transmission path 202 is connected to the port #2-2.

Then, the optical distribution device 100 outputs the optical signals inputted from the respective ports to the ports whose connection relation is set as connection ports to the ports. The connection relation between the ports in the optical distribution device 100 can be arbitrarily changed and set. As the optical distribution device 100, for example, a spatial type optical switch using a micro electro mechanical systems (MEMS) or the like, a waveguide type optical switch using a planar lightwave circuit (PLC) or the like, etc. can be used.

In the shown example of the configuration, for the wavelength variable subscriber device 20 side of the wavelength routing device 30, the port #1-1 is connected to the first signal transmission path 201 and the port #1-2 is connected to the second signal transmission path 202. Furthermore, the port #2-1, #2-2, ..., #2-N-1, #2-N on the wavelength variable communication device 10 side of the wavelength routing device 30 are connected to the wavelength variable communication device 10#1, the wavelength variable communication device 10#2, ..., the wavelength variable communication device 10#N-1, the wavelength variable communication device 10#N, respectively.

Then, the wavelength routing device 30 outputs the optical signals inputted to the ports #1-1, #1-2 on the wavelength variable subscriber device 20 side to the ports uniquely determined by a combination of a wavelength of the optical signal and the port to which the optical signal is inputted on the wavelength variable communication device 10 side. Further, the wavelength routing device 30 outputs the optical signals inputted to each of the ports #2-1 to #2-N on the wavelength variable communication device 10 side to the ports uniquely determined by a combination of a wavelength of the optical signal and a port to which the optical signal is inputted on the wavelength variable subscriber device 20 side. Fig. 2 shows an example of input/output characteristics of the wavelength routing device 30. As shown in Fig. 2, the wavelength routing device 30 outputs, for example, light having a wavelength λU_1 inputted from the port #1-1 to the port #2-1. Then, the wavelength routing device 30 outputs the light of the wavelength λD_1 inputted from the port #2-1 to the port #1-1. In addition, for example, the wavelength routing device 30 outputs the light of the wavelength λU_2 inputted from the port #1-2 to the port #2-1. Then, the wavelength routing device 30 outputs the light of the wavelength λD_2 inputted from the port #2-1 to the port #1-2.

The optical communication system configured as the above description is so-called a PON (Passive Optical Network) system. Then, each wavelength variable subscriber device 20 sets the transmission wavelength and the reception wavelength to the assigned operating wavelength, thereby logically realizing point-to-point communication with the facing wavelength variable communication device 10.

Next, the protection when communication between the wavelength variable subscriber device 20 and the wavelength variable communication device 10 is disconnected in the optical communication system of this embodiment will be described. In the optical communication system of this embodiment, at least the first protection and the second protection can be executed.

First, in the first protection, the wavelength of the optical signal to be transmitted and received is switched from the operating wavelength to the spare wavelength when the wavelength variable subscriber device 20 and the facing wavelength variable communication device 10 are disconnected. Here, the spare wavelength is different from the operating wavelength. In order to switch the wavelength to be transmitted and received to the spare wavelength by the wavelength variable subscriber device 20, it is necessary for the wavelength variable subscriber device 20 to recognize the spare wavelength. Therefore, for example, by notifying the wavelength variable subscriber device 20 of the spare wavelength in advance, the transmission wavelength can be autonomously switched to the spare wavelength when the wavelength variable subscriber device 20 recognizes the communication interruption. That is, the wavelength variable subscriber device 20 can execute the first protection for switching the wavelength of an optical signal to be transmitted and received to the spare wavelength different from the operating wavelength when the wavelength variable subscriber device 20 and the wavelength variable communication device 10 are disconnected.

For example, when a state in which the wavelength variable subscriber device 20 does not receive an optical signal from the facing wavelength variable communication device 10 continues for a wavelength variable predetermined time period or longer, the wavelength variable subscriber device 20 switches a wavelength channel selectively received and then recognizes spare wavelength information carried on the wavelength channel, and the wavelength variable subscriber device 20 can recognize the spare wavelength. As the means for carrying the spare wavelength information on the wavelength channel, a control frame of the same frequency band as that of the client signal (for example, Ethernet OAM (Ethernet is a registered trademark)), or may be notified by using a control channel which does not interfere the frequency band of the client signal (for example, AMCC (Auxiliary Management and Control Channel)).

As described above, the wavelength routing device 30 outputs the optical signals inputted to the ports #1-1, #1-2 on the wavelength variable subscriber device 20 side to the ports uniquely determined by a combination of a wavelength of the optical signal and a port to which the optical signal is inputted on the wavelength variable communication device 10 side. Therefore, when the wavelength variable subscriber device 20 executes the first protection and the transmission/reception wavelength of the wavelength variable subscriber device 20 is switched to the spare wavelength, the facing device of the wavelength variable subscriber device 20 becomes the wavelength variable communication device 10 different from the wavelength variable communication device 10 before switching. That is, the wavelength variable communication device 10 connected to a path through which the spare wavelength communicates in the wavelength routing device 30 becomes a new facing device of the wavelength variable subscriber device 20 in which communication is disconnected.

For example, when communication between the wavelength variable subscriber device 20#1 and the wavelength variable communication device 10#1 is disconnected, the wavelength variable subscriber device 20#1 executes the first protection, and thereby the wavelength variable subscriber device 20#1 switches the transmission/reception wavelength from the operating wavelength (λU_1 andλD_1) to the spare wavelength (λU_2 and λD_ 2). According to the input/output characteristics of Fig. 2, the optical signal of the spare wavelength (λU_2 and λD_ 2) inputted/outputted from and to the port #1-1 of the wavelength routing device 30 is inputted/outputted from the port #2-2 of the wavelength routing device 30 to the wavelength variable communication device 10#2. Therefore, the wavelength variable communication device 10#2 becomes a new facing device of the wavelength variable subscriber device #1.

Next, in the second protection, the optical distribution device 100 switches the optical fiber transmission path 50 to be used when the wavelength variable subscriber device 20 and the wavelength variable communication device 10 are disconnected. In the example of the configuration described here, there are the normal path 51 and the redundant path 52 as the optical fiber transmission path 50. When the wavelength variable subscriber device 20 and the wavelength variable communication device 10 are disconnected, the optical distribution device 100 can execute the second protection in which the connection port corresponding to the port to which an optical signa to be transmitted from the wavelength variable communication device 10 is switched from the port 1#1 connected to the normal path 51 to the port #1-2 connected to the redundant path 52.

Further, in the optical communication system of this embodiment, a third protection may be executed. In the third protection, the optical distribution device 100 switches the signal transmission path 200 to be used when the wavelength variable subscriber device 20 and the wavelength variable communication device 10 are disconnected. When the wavelength variable subscriber device 20 and the wavelength variable communication device 10 are disconnected, the optical distribution device 100 can execute the third protection in which the optical distribution device 100 switches the connection port to which an optical signal to be transmitted from the wavelength variable communication device 10 from the port #2-1 connected to the first signal transmission path 201 to the port #2-2 connected to the second signal transmission path 202.

The wavelength variable subscriber device 20 and the optical distribution device 100 are provided with a computer having, for example, a processor and a memory as hardware. The processor is also called a CPU (Central Processing Unit), a central processing unit, a processing unit, an arithmetic unit, a microprocessor, a microcomputer or a DSP. For the memory, for example, a RAM, a ROM, a flash memory, a nonvolatile or volatile semiconductor memory such as EPROM and EEPROM, or a magnetic disc, an optical disc, a flexible disc, an optical disc, a compact disc, a mini disc, a DVD and the like are applicable.

A program as software is stored in the memories of the wavelength variable subscriber device 20 and the optical distribution device 100. Then, the wavelength variable subscriber device 20 and the optical distribution device 100 execute preset processing by executing the program stored in the memory by the processor, and as a result of cooperation between hardware and software, a function of controlling execution of the first protection, the second protection and the third protection is realized.

Alternatively, the optical communication system may control execution of the first protection, the second protection and the third protection by a control unit (not shown). Also in this case, the control unit (not shown) is provided with a computer having, for example, a processor and a memory as hardware. Then, the processor executes a program stored in a memory of the control unit to perform preset processing, and as a result of cooperation of hardware and software, a function for controlling execution of the first protection, the second protection and the third protection is realized.

Next, a description will be given of an example of an operation procedure of the optical communication system that is configured as described above with reference to Fig. 3.. First, in a step S1, if no disconnection occurs between the wavelength variable communication device 10 and the wavelength variable subscriber device 20, a series of operations are terminated. On the other hand, if there is a disconnection between the wavelength variable communication device 10 and the wavelength variable subscriber device 20, the processing proceeds to a step S2, and the wavelength variable subscriber device 20 which has a disconnection with the facing wavelength variable communication device 10 executes the first protection.

In the following step S3, if the wavelength variable communication device 10 and the wavelength variable subscriber device 20 are not disconnected, it is determined that the communication is recovered, and a series of operations are terminated. On the other hand, when the disconnection between the wavelength variable communication device 10 and the wavelength variable subscriber device 20 is continued in the step S3, the processing proceeds to a step S4, and the optical distribution device 100 executes the second protection. Then, in the following step S5, if the wavelength variable communication device 10 and the wavelength variable subscriber device 20 are not disconnected, it is determined that the communication is recovered, and a series of operations are terminated. On the other hand, if the disconnection between the wavelength variable communication device 10 and the wavelength variable subscriber device 20 is still continued in the step S5, the processing proceeds to a step S6, and the optical distribution device 100 executes the third protection. When the processing of the step S6 is terminated, a series of operations are terminated.

The execution order of the first protection of the step S2, the second protection of the step S4, and the third protection of the step S6 is not limited to the example shown in Fig. 3. That is, the first protection, the second protection, and the third protection may be executed in an arbitrary order.

In the protection method of the optical communication system described above, at least the first step of executing the first protection and the second step of executing the second protection are executed in an arbitrary order. Further, a third step of executing the third protection described above may be provided, and in this case, the first step, the second step, and the third step are executed in an arbitrary order.

In the optical communication system and the protection method for the optical communication system of the present embodiment, at least the first protection for switching the wavelength of an optical signal to be transmitted and received to the spare wavelength different from the operating wavelength by the wavelength variable subscriber device 20 and the second protection for switching the optical fiber transmission path 50 used for communication by the optical distribution device 100 can be executed when the wavelength variable subscriber device 20 and the wavelength variable communication device 10 are disconnected,.

By executing such first protection, the wavelength variable communication device 10 facing the wavelength variable subscriber device 20 can be changed to a new one, and it is possible to cope with a disconnection due to an abnormality or the like of the facing wavelength variable communication device 10. Further, by executing the second protection, the optical fiber transmission path 50 is switched from the normal path 51 to the redundant path 52, and it is possible to cope with a disconnection due to the abnormality or the like of the optical fiber transmission path 50.

Therefore, it is possible to cope with the disconnection due to the abnormality of both the wavelength variable communication device 10 and the optical fiber transmission path 50. Therefore, in any case of when the wavelength variable communication device 10 is single-unit disabled, the optical fiber transmission path 50 is single-unit disabled, or the wavelength variable communication device 10 and the optical fiber transmission path 50 are multiple disabled, the communication can be restarted within a short time period. Specifically, for example, in not only disconnection of an optical fiber transmission path 50 between the optical branching device 40 and the optical distribution device 100, but also failure, function upgrade, maintenance, and the like of the wavelength variable communication device 10, the communication disconnection time period can be shortened. Furthermore, the number of wavelength variable subscriber devices 20 to be protection target can be minimized.

Further, in the optical communication system and the protection method for the optical communication system of this embodiment, the third protection for switching the signal transmission path 200 used for communication between the optical distribution device 100 and the wavelength routing device 30 may be executable when the wavelength variable subscriber device 20 and the wavelength variable communication device 10 are disconnected. By making it possible to execute such third protection, the communication path can be made redundant in addition to the optical fiber transmission path 50 between the optical branching device 40 and the optical distribution device 100, and also in the section between the optical distribution device 100 and the wavelength routing device 30.

### Second Embodiment

A second embodiment of the present disclosure will be described with reference to Figs. 4 and 5**.** Fig. 4 is a diagram schematically showing an entire configuration of the optical communication system. Fig. 5 is a diagram showing an example of input/output characteristics of the wavelength routing device provided in the optical communication system.

In the second embodiment described here, the optical distribution device is provided between the wavelength routing device and each of the wavelength variable communication devices in the configuration of the first embodiment described above. The optical communication system and the protection method of the optical communication system according to the second embodiment will be described mainly with respect to the difference from the first embodiment. The structure in which the description is omitted is basically the same as that of the first embodiment. In the following description, structures similar to or corresponding to those of the first embodiment will be described with the same reference numerals as those used in the description of the first embodiment in principle.

As shown in Fig. 4, the optical communication system according to this embodiment includes a plurality of wavelength variable communication devices 10, a plurality of wavelength variable subscriber devices 20, a wavelength routing device 30, an optical branching device 40 and an optical distribution device 100. In this embodiment, each of the wavelength variable communication devices 10 can change the wavelength of the optical signal to be transmitted. The wavelength routing device 30 and the optical branching device 40 are connected by a plurality of optical fiber transmission paths 50. In the example of the configuration described here, two of a normal path 51 and a redundant path 52 are laid as a plurality of optical fiber transmission paths 50.

In this embodiment, the optical distribution device 100 is provided between the wavelength routing device 30 and each of the wavelength variable communication devices 10. A port on the wavelength variable subscriber device 20 side of the optical distribution device 100 is connected to a wavelength routing device 30 via a plurality of signal transmission paths 200. A port on the wavelength variable communication device 10 side of the optical distribution device 100 is connected to each wavelength variable communication device 10.

In the shown example of the configuration, for the wavelength variable subscriber device 20 side of the wavelength routing device 30, the port #1-1 is connected to the normal path 51 of the optical fiber transmission path 50, and the port #1-2 is connected to the redundant path 52 of the optical fiber transmission path 50. The ports #2-1, #2-2, ..., #2-M on the wavelength variable communication device 10 side of the wavelength routing device 30 are connected to the ports #1-1, #1-2, ..., #1-M on the wavelength variable subscriber device 20 side of the optical distribution device 100 by M signal transmission paths 200, respectively. Then, ports #2-1, #2-2, ..., #2-N on the wavelength variable communication device 10 side of the optical distribution device 100 are connected to the wavelength variable communication device 10#1, the wavelength variable communication device 10#2, ..., the wavelength variable communication device 10#N, respectively.

The optical distribution device 100 outputs the optical signal inputted from the respective ports to a port in which a connection relation is set as a connection port to the port. The connection relation between the ports in the optical distribution device 100 can be arbitrarily changed and set.

The wavelength routing device 30 outputs the optical signals inputted to the ports #1-1, #1-2 on the wavelength variable subscriber device 20 side to the ports uniquely determined by a combination of a wavelength of the optical signal and a port to which the optical signal is inputted on the wavelength variable communication device 10. Further, the wavelength routing device 30 outputs the optical signals inputted to each of the ports #2-1 to #2-M on the wavelength variable communication device 10 side to the ports uniquely determined by a combination of a wavelength of the optical signal and a port to which the optical signal is inputted on the wavelength variable subscriber device 20 side. Fig. 5 shows an example of input/output characteristics of the wavelength routing device 30. As shown in Fig. 5, the wavelength routing device 30 outputs, for example, light having a wavelength λU_1 inputted from the port #1-1 to the port #2-1. Then, the wavelength routing device 30 outputs the light of the wavelength λD_1 inputted from the port #2-1 to the port #1-1. In addition, for example, the wavelength routing device 30 outputs the light of the wavelength λU_2 inputted from the port #1-2 to the port #2-1. Then, the wavelength routing device 30 outputs the light of the wavelength λD_2 inputted from the port #2-1 to the port #1-2.

Next, protection when communication between the wavelength variable subscriber device 20 and the wavelength variable communication device 10 is disconnected in the optical communication system of this embodiment will be described. In the optical communication system of this embodiment, at least the first protection and the second protection can be executed.

First, in the first protection, the wavelength variable subscriber device 20 switches the wavelength of the optical signal to be transmitted and received from the operating wavelength to the spare wavelength when the wavelength variable subscriber device 20 and the facing wavelength variable communication device 10 are disconnected. Here, the spare wavelength is different from the operating wavelength. That is, the wavelength variable subscriber device 20 can execute the first protection for switching the wavelength of an optical signal to be transmitted and received to the spare wavelength different from the operating wavelength when the wavelength variable subscriber device 20 and the wavelength variable communication device 10 are disconnected.

As described above, the wavelength routing device 30 outputs the optical signals inputted to the ports #1-1, #1-2 on the wavelength variable subscriber device 20 side to the ports #2-1 to #2-M on the wavelength variable communication device 10 side according to the input/output characteristics shown in Fig. 5. The input/output characteristics of the wavelength routing device 30 are set so that the output port when the operating wavelength is inputted to the port #1-1 and the output port when the spare wavelength is inputted to the port #1-2 are the same for each of the wavelength variable subscriber devices 20. Therefore, when the wavelength of the optical signal to be transmitted and received by the wavelength variable subscriber device 20 is switched from the operating wavelength to the spare wavelength, if the second protection described later is not executed, the wavelength variable communication device 10 facing the wavelength variable subscriber device 20 is not changed, and the optical fiber transmission path 50 to be used can be switched from the normal path 51 to the redundant path 52.

For example, when communication between the wavelength variable subscriber device 20#1 and the wavelength variable communication device 10#1 is disconnected, the wavelength variable subscriber device 20#1 executes the first protection, and thereby the wavelength variable subscriber device 20#1 switches the transmission/reception wavelength from the operating wavelength (λU_1 and λD_1) to the spare wavelength (λU_2 and λD_2). Then, according to the input/output characteristics of Fig. 5, the optical signals of the spare wavelengths (λU_2 and λD_2) inputted/outputted to and from the port #1-2 of the wavelength routing device 30, are inputted/outputted from the port #2-1 of the wavelength routing device 30 to the port #1-1 of the optical distribution device 100. Then, the optical signal inputted/outputted to and from the port #1-1 of the optical distribution device 100 is inputted/outputted to and from the wavelength variable communication device 101. Communication by the redundant path 52 can be started by switching the transmission and reception wavelength of the wavelength variable communication device 10#1 from the operating wavelength (λU_1 and λ D_1) to the spare wavelength (λU_2 and λD_2).

Next, in the second protection, when the wavelength variable subscriber device 20 and the wavelength variable communication device 10 are disconnected, the optical distribution device 100 switches the connection destination of the disconnected wavelength variable subscriber device 20 to the wavelength variable communication device 10 different from the disconnected wavelength variable communication device 10. For example, when communication between the wavelength variable subscriber device 20#1 and the wavelength variable communication device 10#1 is disconnected, the optical distribution device 100 executes the second protection and switches the connection destination of the port #1-1 in the optical distribution device 100 to the port #2-2 to switch the connection destination of the wavelength variable subscriber device 20#1 to the wavelength variable communication device 10#2. Then, by setting the transmission and reception wavelength of the wavelength variable communication device 10#2 to the operating wavelength (λU_1 and AD_1), the communication between the wavelength variable subscriber device 20#1 and the wavelength variable communication device 10#2 can be started.

Further, in the optical communication system of this embodiment, the third protection may be executable. In the third protection, as in the first embodiment, the optical distribution device 100 switches the signal transmission path 200 to be used when the wavelength variable subscriber device 20 and the wavelength variable communication device 10 are disconnected.

In the protection method of the optical communication system described above, at least the first step of executing the first protection and the second step of executing the second protection are executed in an arbitrary order. Further, the third step of executing the third protection described above may be provided, and in this case, the first step, the second step, and the third step are executed in an arbitrary order.

In the optical communication system and the protection method for the optical communication system of this embodiment, when the wavelength variable subscriber device 20 is disconnected from the wavelength variable communication device 10, the first protection for switching the wavelength of the optical signal to be transmitted and received by the wavelength variable subscriber device 20 to a spare wavelength different from the operating wavelength and the second protection for switching the connection destination of the wavelength variable subscriber device 20 to the wavelength variable communication device 10 different from the disconnected wavelength variable communication device 10 can be executed.

By executing such first protection, the optical fiber transmission path 50 can be switched from the normal path 51 to the redundant path 52 to cope with the disconnection due to the abnormality or the like of the optical fiber transmission path 50. Further, by executing the second protection, the wavelength variable communication device 10 facing the wavelength variable subscriber device 20 can be changed to a new one, and it is possible to cope with the disconnection due to the abnormality or the like of the facing wavelength variable communication device 10.

Therefore, it is possible to cope with the disconnection due to the abnormality of both the wavelength variable communication device 10 and the optical fiber transmission path 50. Therefore, in any cases of when the wavelength variable communication device 10 is single-unit disabled, the optical fiber transmission path 50 is single-unit disabled, or the wavelength variable communication device 10 and the optical fiber transmission path 50 are multiple disabled, the communication can be restarted within a short time period. Specifically, for example, in not only disconnection of an optical fiber transmission path 50 between the optical branching device 40 and the optical distribution device 100, but also failure, function upgrade, maintenance, and the like of the wavelength variable communication device 10, the communication disconnection time period can be shortened. Furthermore, the number of wavelength variable subscriber devices 20 to be protection target can be minimized. In other words, the optical communication system and the protection method for the optical communication system having the above-described structure can achieve the same effects as those of the first embodiment.

Further, in the optical communication system and the protection method for the optical communication system of this embodiment, the third protection for switching the signal transmission path 200 used for communication between the optical distribution device 100 and the wavelength routing device 30 may be executable when the wavelength variable subscriber device 20 and the wavelength variable communication device 10 are disconnected. By making it possible to execute such third protection, the communication path can be made redundant in addition to the optical fiber transmission path 50 between the optical branching device 40 and the optical distribution 100, and also in the section between the optical distribution 100 and the wavelength routing device 30.

### Third Embodiment

The third embodiment of the present disclosure will be described with reference to Fig. 6. Fig. 6 is a diagram schematically showing an entire configuration of the optical communication system.

In the third embodiment described here, the optical branching device on the wavelength variable subscriber device side is also changed to the wavelength routing device in the configuration of the second embodiment described above. The optical communication system and the protection method for the optical communication system according to the third embodiment will be described below mainly with respect to the difference from the second embodiment by taking the configuration of the second embodiment as an example. The structure in which the description is omitted is basically the same as that of the second embodiment.

As shown in Fig. 6, the optical communication system according to this embodiment includes the plurality of wavelength variable communication devices 10, the plurality of wavelength variable subscriber devices 20, a first wavelength routing device 31, a second wavelength routing device 32 and the optical distribution device 100. In this embodiment, each of the wavelength variable communication devices 10 can change the wavelength of the optical signal to be transmitted. Each of the wavelength variable subscriber devices 20 can also change the wavelength of the optical signal to be transmitted.

The first wavelength routing device 31 is connected to each of the wavelength variable communication devices 10. The second wavelength routing device 32 is connected to each of the wavelength variable subscriber devices 20. The first wavelength routing device 31 and the second wavelength routing device 32 are connected by the plurality of optical fiber transmission paths 50. In the example of the configuration described here, two of the normal path 51 and the redundant path 52 are laid as the plurality of optical fiber transmission paths 50.

In this embodiment, the optical distribution device 100 is provided between the first wavelength routing device 31 and each of the wavelength variable communication devices 10. The port on the wavelength variable subscriber device 20 side of the optical distribution device 100 is connected to the first wavelength routing device 31 via the plurality of signal transmission paths 200. The port on the wavelength variable communication device 10 side of the optical distribution device 100 is connected to each of the wavelength variable communication devices 10.

In the shown example of the configuration, for the wavelength variable communication device 10 side of the second wavelength routing device 32, the port #1-1 is connected to the normal path 51 of the optical fiber transmission path 50, and the port #1-2 is connected to the redundant path 52 of the optical fiber transmission path 50. In addition, the ports #2-1, #2-2, ..., #2-M on the wavelength variable subscriber device 20 side in the second wavelength routing device 32 are connected to the wavelength variable subscriber device 20#1, the wavelength variable subscriber device 20#2, ..., the wavelength variable subscriber device 20#M, respectively.

In addition, on the wavelength variable subscriber device 20 side of the first wavelength routing device 31, the port #1-1 is connected to the normal path 51 of the optical fiber transmission path 50, and the port #1-2 is connected to the redundant path 52 of the optical fiber transmission path 50. The ports #2-1, #2-2, ..., #2-M on the wavelength variable communication device 10 side in the first wavelength routing device 31 are connected to the port #1-1, #1-2, ..., #1-M on the wavelength variable subscriber device 20 in the optical distribution device 100 by M signal transmission paths 200, respectively. Then, the ports #2-1, #2-2, ..., #2-N on the wavelength variable communication device 10 side in the optical distribution device 100 are connected to the wavelength variable communication device 10#1, the wavelength variable communication device 10#2, ..., the wavelength variable communication device 10#N, respectively.

The optical distribution device 100 outputs the optical signals inputted from the respective ports to the port in which a connection relation is set as a connection port to the port. The connection relation between the ports in the optical distribution device 100 can be arbitrarily changed and set.

The first wavelength routing device 31 outputs the optical signals inputted to the ports #1-1, #1-2 on the wavelength variable subscriber device 20 side to the ports uniquely determined by a combination of the wavelength of the optical signal and the port to which the optical signal is inputted on the wavelength variable communication device 10 side. Further, the first wavelength routing device 31 outputs the optical signals inputted to each of the ports #2-1 to #2-M on the wavelength variable communication device 10 side to the ports uniquely determined by a combination of the wavelength of the optical signal and the port to which the optical signal is inputted on the wavelength variable subscriber device 20 side.

The second wavelength routing device 32 outputs the optical signals inputted to the ports #1-1, #1-2 on the wavelength variable communication device 10 side to the ports uniquely determined by a combination of the wavelength of the optical signal and the port to which the optical signal is inputted on the wavelength variable subscriber device 20 side. Further, the second wavelength routing device 32 outputs the optical signals inputted to each of the ports #2-1 to #2-M on the wavelength variable subscriber device 20 side to the ports uniquely determined by a combination of the wavelength of the optical signal and the port to which the optical signal is inputted on the wavelength variable communication device 10 side. In this case, the input/output characteristics of the first wavelength routing device 31 and the second wavelength routing device 32 are the same as those shown in Fig. 5 described in the second embodiment, for example.

Next, the protection when communication between the wavelength variable subscriber device 20 and the wavelength variable communication device 10 is disconnected in the optical communication system of this embodiment will be described. In the optical communication system of this embodiment, the first protection and the second protection can be executed.

First, in the first protection, the wavelength variable subscriber device 20 and the wavelength variable communication device 10 switches the wavelength of an optical signal to be transmitted from the operating wavelength to a spare wavelength, when communication between the wavelength variable subscriber device 20 and the wavelength variable communication device 10 is disconnected. Here, the spare wavelength is different from the operating wavelength. That is, the wavelength variable subscriber device 20 and the wavelength variable communication device 10 can execute the first protection for switching the wavelength of the optical signal transmitted by each of them to the spare wavelength different from the operating wavelength when the communication is disconnected.

As described above, the first wavelength routing device 31 outputs the optical signals inputted to the port #1-1, #1-2 on the wavelength variable subscriber device 20 side to the port #2-1 to #2-M on the wavelength variable communication device 10 side according to the input/output characteristics shown in Fig. 5. The input/output characteristics of the first wavelength routing device 31 are set so that the output port when the operating wavelength is inputted to the port #1-1 and the output port when the spare wavelength is inputted to the port #1-2 are the same for each of the wavelength variable subscriber devices 20. Therefore, when the transmission and reception wavelengths of the wavelength variable subscriber device 20 and the wavelength variable communication device 10 are switched from the operating wavelength to the spare wavelength, the optical fiber transmission path 50 to be used can be switched from the normal path 51 to the redundant path 52 without changing the connection relation between the wavelength variable subscriber device 20 and the wavelength variable communication device 10 in the case of when the second protection described later is not executed.

For example, when communication between the variable wavelength subscriber device 20#1 and the variable wavelength communication device 10#1 is disconnected, the variable wavelength subscriber device 20#1 and the variable wavelength communication device 10#1 execute the first protection, thereby switching the transmission and reception wavelengths of both from the operating wavelength (λU_1 and λD_1) to the spare wavelength (λU_2 and λD_2). According to the input/output characteristics of Fig. 5, the optical signals of the spare wavelength (λU_2 and λD_2) inputted and outputted from the wavelength variable subscriber device 20#1 to the port #2-1 of the second wavelength routing device 32 are inputted and outputted from the port #1-2 of the second wavelength routing device 32 to the redundant path 52**.** On the other hand, the optical signals of the spare wavelength (λU_2 and λD_2) inputted and outputted from the redundant path 52 to the port #1-2 of the first wavelength routing device 31 are inputted and outputted from the port #2-1 of the first wavelength routing device 31 to the port #1-1 of the optical distribution device 100. Then, the optical signal inputted and outputted to and from the port #1-1 of the optical distribution device 100 is inputted and outputted to and from the wavelength variable communication device 10#1. Therefore, communication by the redundant path 52 can be started between the wavelength variable subscriber device 20#1 and the wavelength variable communication device 10#1.

Next, in the second protection, when the wavelength variable subscriber device 20 and the wavelength variable communication device 10 are disconnected, the optical distribution device 100 switches the disconnected connection destination of the wavelength variable subscriber device 20 to the wavelength variable communication device 10 different from the disconnected wavelength variable communication device 10. For example, when communication between the wavelength variable subscriber device 20#1 and the wavelength variable communication device 10#1 is disconnected, the optical distribution device 100 executes the second protection and switches the connection destination of the port #1-1 in the optical distribution device 100 to the port #2-2 to switch the connection destination of the wavelength variable subscriber device 20#1 to the wavelength variable communication device 10#2. Then, by setting the transmission and reception wavelength of the wavelength variable communication device 10#2 to the operating wavelength (λU_1 and AD_1), the communication between the wavelength variable subscriber device 20#1 and the wavelength variable communication device 10#2 can be started.

In the protection method of the optical communication system described above, at least the first step of executing the first protection and the second step of executing the second protection are executed in an arbitrary order.

In the optical communication system and the protection method for the optical communication system of this embodiment, when the wavelength variable subscriber device 20 and the wavelength variable communication device 10 are disconnected, the first protection for switching the wavelength of then optical signal transmitted by each of the wavelength variable subscriber device 20 and the wavelength variable communication device 10 to the spare wavelength different from the operating wavelength, and the second protection for switching the connection destination of the wavelength variable describer device 20 to the wavelength variable communication device 10 different from the disconnected wavelength variable communication device 10 are executable.

By executing such first protection, the optical fiber transmission path 50 can be switched from the normal path 51 to the redundant path 52 to cope with the disconnection due to the abnormality or the like of the optical fiber transmission path 50. Further, by executing the second protection, the wavelength variable communication device 10 facing the wavelength variable subscriber device 20 can be changed to a new one, and it is possible to cope with the disconnection due to the abnormality or the like of the facing wavelength variable communication device 10.

Therefore, it is possible to cope with the disconnection due to the abnormality of both the wavelength variable communication device 10 and the optical fiber transmission path 50. Therefore, in any case of the case when the wavelength variable communication device 10 is single-unit disabled, the optical fiber transmission path 50 is single-unit disabled, or the wavelength variable communication device 10 and the optical fiber transmission path 50 are multiple disabled, the communication can be restarted in a short time period. Specifically, for example, in not only disconnection of an optical fiber transmission path 50 between the second wavelength routing device 32 and the optical distribution device 100, but also failure, function upgrade, maintenance, and the like of the wavelength variable communication device 10, the communication disconnection time period can be shortened. Furthermore, the number of wavelength variable subscriber devices 20 to be protection target can be minimized. That is, the optical communication system and the protection method for the optical communication system having the above described configuration can achieve the same effects as those of the second embodiment.

### [Industrial Applicability]

The present disclosure can be used for the optical communication system and the protection method of the optical communication system, which perform communication between the plurality of wavelength variable communication devices and the plurality of wavelength variable subscriber devices via the plurality of optical fiber transmission paths.

### [Reference Signs List]

- 10: Wavelength variable communication device
- 20: Wavelength variable subscriber device
- 30: Wavelength routing device
- 31: First wavelength routing device
- 32: Second wavelength routing device
- 40: Optical branching device
- 50: Optical fiber transmission path
- 51: Normal path
- 52: Redundant path
- 100: Optical distribution device
- 200: Signal transmission path
- 201: First signal transmission path
- 202: Second signal transmission path

## Claims

1. An optical communication system comprising:
a wavelength variable communication device group (10) including a plurality of wavelength variable communication devices (10#1 - 10#M) configured to transmit an optical signal downward and capable of changing a wavelength of the optical signal to be transmitted;
a wavelength variable subscriber device group (20) including a plurality of wavelength variable subscriber devices (20#1 - 20#N) configured to transmit an optical signal upward and capable of changing a wavelength of the optical signal to be transmitted and received;
a wavelength routing device (30) connected to each of the wavelength variable communication devices (10#1 - 10#M);
an optical branching device (40) connected to each of the wavelength variable subscriber devices (20#1 - 20#N) and to a plurality of optical fiber transmission paths (50), to branch, regardless of the wavelength, light inputted from a wavelength variable subscriber device to the plurality of optical fiber transmission paths (50) and to branch, regardless of the wavelength, light inputted from the plurality of optical fiber transmission paths (50) to each of the wavelength variable subscriber devices (20#1 - 20#N);
the plurality of optical fiber transmission paths (50) including a normal optical fiber transmission path (51) and a redundant optical fiber transmission path (52) and connecting the optical branching device (40) with an optical distribution device (100);
a plurality of signal transmission paths (200) connecting the wavelength routing device (30) with the optical distribution device (100), the optical distribution device (100) being configured to arbitrarily set and change a connection relation between the optical fiber transmission paths (50) and the signal transmission paths (200); and
wherein
the wavelength routing device (30) is configured to output an optical signal inputted from a port on the wavelength variable subscriber device side to a port uniquely determined by a combination of the wavelength of the optical signal and the port to which the optical signal is inputted, and wherein each wavelength variable subscriber device is configured to set one wavelength channel as an operating wavelength, thereby logically realizing point-to-point communication with one wavelength variable communication device,
the wavelength variable subscriber devices (20#1 - 20#N) are capable of executing a first protection for switching the wavelength of the optical signal to be transmitted and received to a spare wavelength different from an operating wavelength, when the wavelength variable subscriber device (20#1 - 20#N) does not receive the optical signal for a predetermined time period or longer from a wavelength variable communication device (10#1 - 10#M) connected by logical point-to-point communication, and
the optical distribution device (100) is capable of executing a second protection for switching the normal optical fiber transmission path (51) to the redundant optical fiber transmission path (52) by switching ports, when the wavelength variable subscriber device (20#1 - 20#N) does not receive the optical signal for a predetermined time period or longer from the wavelength variable communication device (10#1 - 10#M) connected by logical point-to-point communication, and
the wavelength variable subscriber device (20#1 - 20#N), the wavelength variable communication device (10#1 - 10#M) and the optical distribution device (100) are configured to execute the first protection and the second protection in an arbitrary order.

2. An optical communication system comprising:
a wavelength variable communication device group (10) including a plurality of wavelength variable communication devices (10#1 - 10#M) configured to transmit an optical signal downward and capable of changing a wavelength of an optical signal to be transmitted;
a wavelength variable subscriber device group (20) including a plurality of wavelength variable subscriber devices (20#1 - 20#N) configured to transmit an optical signal upward and capable of changing a wavelength of an optical signal to be transmitted and received;
an optical distribution device (100) connected to each of the wavelength variable communication devices (10#1 - 10#M);
an optical branching device (40) connected to each of the wavelength variable subscriber devices (20#1 - 20#N) and to a plurality of optical fiber transmission paths (50), to branch, regardless of the wavelength, light inputted from a wavelength variable subscriber device to the plurality of optical fiber transmission paths (50) and to branch, regardless of the wavelength, light inputted from the plurality of optical fiber transmission paths (50) to each of the wavelength variable subscriber devices (20#1 - 20#N);
the plurality of optical fiber transmission paths (50) including a normal optical fiber transmission path (51) and a redundant optical fiber transmission path (52) and connecting the optical branching device (40) with a wavelength routing device (30);
a plurality of signal transmission paths (200) connecting the wavelength routing device (30) and the optical distribution device (100), the optical distribution device (100) being configured to arbitrarily set and change a connection relation between the wavelength variable communication devices (10#1 - 10#M) and the signal transmission paths (200), and
wherein
the wavelength routing device (30) is configured to output the optical signal inputted from a port on the wavelength variable subscriber device side to a port uniquely determined by a combination of the wavelength of the optical signal and the port to which the optical signal is inputted, and wherein each wavelength variable subscriber device is configured to set one wavelength channel as an operating wavelength, thereby logically realizing point-to-point communication with one wavelength variable communication device,
the wavelength variable subscriber devices (20#1 - 20#N) are capable of executing a first protection for switching the wavelength of the optical signal to be transmitted and received to a spare wavelength different from an operating wavelength when the wavelength variable subscriber device (20#1 - 20#N) does not receive the optical signal for a predetermined time period or longer from a wavelength variable communication device (10#1 - 10#M) connected by logical point-to-point communication, and
the optical distribution device (100) is capable of executing a second protection for switching the connection destination of the wavelength variable subscriber device (20#1 -20#M) to the wavelength variable communication device (10#1 - 10#N) different from the disconnected wavelength variable communication device (10#1 - 10#N), when the wavelength variable subscriber device group (20#1 - 20#N) does not receive the optical signal for a predetermined time period or longer from the wavelength variable communication device group (10#1 - 10#N) connected by logical point-to-point communication, and
the wavelength variable subscriber device (20#1 - 20#N), the wavelength variable communication device in (10#1 - 10#N) and the optical distribution device (100) are configured to execute the first protection and the second protection in an arbitrary order.

3. The optical communication system according to claim 1 or claim 2, wherein
the optical distribution device (100) is capable of executing a third protection for switching the signal transmission path (200) to be used when the wavelength variable subscriber device (20) and the wavelength variable communication device (10) are disconnected.

4. An optical communication system comprising:
a wavelength variable communication device group (10) including a plurality of wavelength variable communication devices (10#1 - 10#M) configured to transmit an optical signal downward and capable of changing a wavelength of an optical signal to be transmitted;
a wavelength variable subscriber device group (20) including a plurality of wavelength variable subscriber devices (20#1 - 20#N) configured to transmit an optical signal upward and capable of changing a wavelength of an optical signal to be transmitted and received;
a first wavelength routing device (31) connected to each of the wavelength variable communication devices (10#1 - 10#M);
a second wavelength routing device (32) connected to each of the wavelength variable subscriber devices (20#1 - 20#N);
a plurality of optical fiber transmission paths (50) including a normal optical fiber transmission path (51) and a redundant optical fiber transmission path (52) and connecting the first wavelength routing device (31) and the second wavelength routing device (32); and
a plurality of signal transmission paths (200) connecting the first wavelength routing device (31) and an optical distribution device (100) provided between the first wavelength routing device (31) and each of the wavelength variable communication devices (10#1 - 10#M), the optical distribution device (100) being configured to arbitrarily set and change a connection relation between the wavelength variable communication devices (10#1 - 10#M) and the signal transmission paths (200), and
wherein
the first wavelength routing device (31) is configured to output the optical signal inputted from a port on the wavelength variable subscriber device side to a port uniquely determined by a combination of the wavelength of the optical signal and the port to which the optical signal is inputted,
the second wavelength routing device (32) is configured to output the optical signal inputted from a port on the wavelength variable communication device side to a port uniquely determined by a combination of the wavelength of the optical signal and the port to which the optical signal is inputted,
the wavelength variable subscriber devices (20#1 - 20#N) and the wavelength variable communication device group (10) are capable of executing a first protection for switching the wavelength of the respective optical signal to be transmitted and received to a spare wavelength different from an operating wavelength, when the wavelength variable subscriber device (20#1 - 20#N) does not receive the optical signal for a predetermined time period or longer from the a wavelength variable communication device (10#1 - 10#M) connected by logical point-to-point communication,
the optical distribution device (100) is capable of executing a second protection for switching the connection destination of the wavelength variable subscriber device (20#1 -20#M) to the wavelength variable communication device (10#1 - 10#N) different from the disconnected wavelength variable communication device (10#1 -10#N), when the wavelength variable subscriber device group (20#1 - 20#N) does not receive the optical signal for a predetermined time period or longer from the wavelength variable communication device group (10#1 - 10#N) connected by logical point-to-point communication, and
the wavelength variable subscriber device (20#1 - 20#N), the wavelength variable communication device (10#1 - 10#N) and the optical distribution device (100) are configured to execute the first protection and the second protection in an arbitrary order.

5. A protection method for an optical communication system according to claim 1 comprising a first step and a second step, wherein
the first step being a step in which the wavelength variable subscriber device (20) switches the wavelength of the optical signal to be transmitted and received to a spare wavelength different from an operating wavelength when the wavelength variable subscriber device group (20) and the wavelength variable communication device group (10) are disconnected, the spare wavelength being notified in advance or recognized from spare wavelength information carried on a wavelength channel,
the second step being a step in which the optical distribution device (100) switches the normal optical fiber transmission path (51) to the redundant optical fiber transmission path (52), when the wavelength variable subscriber device group (20) and the wavelength variable communication device group (10) are disconnected,
the first step and the second step being executed in an arbitrary order.

6. A protection method for an optical communication system according to claim 2 comprising a first step and a second step, wherein
the first step being a step in which the wavelength variable subscriber device group (20) switches the wavelength of the optical signal to be transmitted and received to a spare wavelength different from an operating wavelength when the wavelength variable subscriber device group (20) and the wavelength variable communication device group (10) are disconnected, the spare wavelength being notified in advance or recognized from spare wavelength information carried on a wavelength channel,
the second step being a step in which the optical distribution device (100) switches the connection destination of the wavelength variable subscriber device (20#1 -20#M) to the wavelength variable communication device (10#1 -10#N) different from the disconnected wavelength variable communication device (10#1 - 10#N) when the wavelength variable subscriber device group (20) and the wavelength variable communication device group (10) are disconnected,
the first step and the second step being executed in an arbitrary order.

7. The protection method for the optical communication system according to claim 5 or claim 6, further comprising a third step, the third step being a step in which the optical distribution device (100) switches the signal transmission path (200) to be used when the wavelength variable subscriber device (20) and the wavelength variable communication device (10) are disconnected,
the first step, the second step and the third step being executed in an arbitrary order.

8. A protection method for an optical communication system according to claim 4, comprising a first step and a second step, wherein
the first step being a step in which the wavelength variable subscriber device group (20) and the wavelength variable communication device group (10) switch the wavelength of the respective optical signal to be transmitted and received to a spare wavelength different from an operating wavelength when the wavelength variable subscriber device group (20) and the wavelength variable communication device group (10) are disconnected, the spare wavelength being notified in advance or recognized from spare wavelength information carried on a wavelength channel,
the second step being a step in which the optical distribution device (100) switches the connection destination of the wavelength variable subscriber device (20#1 -20#M) to the wavelength variable communication device (10#1 -10#N) different from the disconnected wavelength variable communication device (10#1 -10#N) when the wavelength variable subscriber device group (20) and the wavelength variable communication device group (10) are disconnected,
the first step and the second step being executed in an arbitrary order.

## Patentansprüche

1. Optisches Kommunikationssystem, umfassend:
eine Gruppe wellenlängenvariabler Kommunikationsvorrichtungen (10), einschließend eine Vielzahl wellenlängenvariabler Kommunikationsvorrichtungen (10#1 - 10#M), die ausgebildet sind, ein optisches Signal in Abwärtsrichtung zu übertragen, und in der Lage sind, eine Wellenlänge des zu übertragenden optischen Signals zu ändern;
eine Gruppe wellenlängenvariabler Teilnehmervorrichtungen (20), einschließend eine Vielzahl wellenlängenvariabler Teilnehmervorrichtungen (20#1 - 20#N), die ausgebildet sind, ein optisches Signal in Aufwärtsrichtung zu übertragen, und in der Lage sind, eine Wellenlänge des zu übertragenden und zu empfangenden optischen Signals zu ändern;
eine Wellenlängen-Routing-Vorrichtung (30), die mit jeder der wellenlängenvariablen Kommunikationsvorrichtungen (10#1 - 10#M) verbunden ist;
eine optische Verzweigungsvorrichtung (40), die mit jeder der wellenlängenvariablen Teilnehmervorrichtungen (20#1 - 20#N) und mit einer Vielzahl optischer Faserübertragungswege (50) verbunden ist, um, unabhängig von der Wellenlänge, Licht zu verzweigen, das von einer wellenlängenvariablen Teilnehmervorrichtung in die Vielzahl optischer Faserübertragungswege (50) eingespeist wird, und um, unabhängig von der Wellenlänge, Licht zu verzweigen, das von der Vielzahl optischer Faserübertragungswege (50) in jede der wellenlängenvariablen Teilnehmervorrichtungen (20#1 - 20#N) eingespeist wird;
wobei die Vielzahl optischer Faserübertragungswege (50) einen normalen optischen Faserübertragungsweg (51) und einen redundanten optischen Faserübertragungsweg (52) einschließt und die optische Verzweigungsvorrichtung (40) mit einer optischen Verteilungsvorrichtung (100) verbindet;
eine Vielzahl von Signalübertragungswegen (200), die die Wellenlängen-Routing-Vorrichtung (30) mit der optischen Verteilungsvorrichtung (100) verbinden, wobei die optische Verteilungsvorrichtung (100) ausgebildet ist, eine Verbindungsbeziehung zwischen den optischen Faserübertragungswegen (50) und den Signalübertragungswegen (200) beliebig festzulegen und zu ändern; und
wobei
die Wellenlängen-Routing-Vorrichtung (30) ausgebildet ist, ein optisches Signal, das von einem Port auf der Seite der wellenlängenvariablen Teilnehmervorrichtung eingespeist wird, an einen Port auszugeben, der durch eine Kombination der Wellenlänge des optischen Signals und des Ports, in den das optische Signal eingespeist wird, eindeutig bestimmt ist, und wobei jede wellenlängenvariable Teilnehmervorrichtung ausgebildet ist, einen Wellenlängenkanal als eine Betriebswellenlänge festzulegen und dadurch Punkt-zu-Punkt-Kommunikation mit einer wellenlängenvariablen Kommunikationsvorrichtung logisch zu realisieren,
die wellenlängenvariablen Teilnehmervorrichtungen (20#1 - 20#N) in der Lage sind, eine erste Schutzmaßnahme zum Umschalten der Wellenlänge des zu übertragenden und zu empfangenden optischen Signals auf eine von einer Betriebswellenlänge verschiedene Ersatzwellenlänge auszuführen, wenn die wellenlängenvariable Teilnehmervorrichtung (20#1 - 20#N) das optische Signal für einen vorbestimmten Zeitraum oder länger nicht von einer wellenlängenvariablen Kommunikationsvorrichtung (10#1 - 10#M) empfängt, die durch logische Punkt-zu-Punkt-Kommunikation verbunden ist, und
die optische Verteilungsvorrichtung (100) in der Lage ist, eine zweite Schutzmaßnahme zum Umschalten des normalen optischen Faserübertragungswegs (51) auf den redundanten optischen Faserübertragungsweg (52) durch Umschalten von Ports auszuführen, wenn die wellenlängenvariable Teilnehmervorrichtung (20#1 - 20#N) das optische Signal für einen vorbestimmten Zeitraum oder länger nicht von der wellenlängenvariablen Kommunikationsvorrichtung (10#1 - 10#M) empfängt, die durch logische Punkt-zu-Punkt-Kommunikation verbunden ist, und
die wellenlängenvariable Teilnehmervorrichtung (20#1 - 20#N), die wellenlängenvariable Kommunikationsvorrichtung (10#1 - 10#M) und die optische Verteilungsvorrichtung (100) ausgebildet sind, die erste Schutzmaßnahme und die zweite Schutzmaßnahme in beliebiger Reihenfolge auszuführen.

2. Optisches Kommunikationssystem, umfassend:
eine Gruppe wellenlängenvariabler Kommunikationsvorrichtungen (10), einschließend eine Vielzahl wellenlängenvariabler Kommunikationsvorrichtungen (10#1 - 10#M), die ausgebildet sind, ein optisches Signal in Abwärtsrichtung zu übertragen, und in der Lage sind, eine Wellenlänge eines zu übertragenden optischen Signals zu ändern;
eine Gruppe wellenlängenvariabler Teilnehmervorrichtungen (20), einschließend eine Vielzahl wellenlängenvariabler Teilnehmervorrichtungen (20#1 - 20#N), die ausgebildet sind, ein optisches Signal in Aufwärtsrichtung zu übertragen, und in der Lage sind, eine Wellenlänge eines zu übertragenden und zu empfangenden optischen Signals zu ändern;
eine optische Verteilungsvorrichtung (100), die mit jeder der wellenlängenvariablen Kommunikationsvorrichtungen (10#1 - 10#M) verbunden ist;
eine optische Verzweigungsvorrichtung (40), die mit jeder der wellenlängenvariablen Teilnehmervorrichtungen (20#1 - 20#N) und mit einer Vielzahl optischer Faserübertragungswege (50) verbunden ist, um, unabhängig von der Wellenlänge, Licht zu verzweigen, das von einer wellenlängenvariablen Teilnehmervorrichtung in die Vielzahl optischer Faserübertragungswege (50) eingespeist wird, und um, unabhängig von der Wellenlänge, Licht zu verzweigen, das von der Vielzahl optischer Faserübertragungswege (50) in jede der wellenlängenvariablen Teilnehmervorrichtungen (20#1 - 20#N) eingespeist wird;
wobei die Vielzahl optischer Faserübertragungswege (50) einen normalen optischen Faserübertragungsweg (51) und einen redundanten optischen Faserübertragungsweg (52) einschließt und die optische Verzweigungsvorrichtung (40) mit einer Wellenlängen-Routing-Vorrichtung (30) verbindet;
eine Vielzahl von Signalübertragungswegen (200), die die Wellenlängen-Routing-Vorrichtung (30) und die optische Verteilungsvorrichtung (100) verbinden, wobei die optische Verteilungsvorrichtung (100) ausgebildet ist, eine Verbindungsbeziehung zwischen den wellenlängenvariablen Kommunikationsvorrichtungen (10#1 - 10#M) und den Signalübertragungswegen (200) beliebig festzulegen und zu ändern, und
wobei
die Wellenlängen-Routing-Vorrichtung (30) ausgebildet ist, das optische Signal, das von einem Port auf der Seite der wellenlängenvariablen Teilnehmervorrichtung eingespeist wird, an einen Port auszugeben, der durch eine Kombination der Wellenlänge des optischen Signals und des Ports, in den das optische Signal eingespeist wird, eindeutig bestimmt ist, und wobei jede wellenlängenvariable Teilnehmervorrichtung ausgebildet ist, einen Wellenlängenkanal als eine Betriebswellenlänge festzulegen und dadurch Punkt-zu-Punkt-Kommunikation mit einer wellenlängenvariablen Kommunikationsvorrichtung logisch zu realisieren,
die wellenlängenvariablen Teilnehmervorrichtungen (20#1 - 20#N) in der Lage sind, eine erste Schutzmaßnahme zum Umschalten der Wellenlänge des zu übertragenden und zu empfangenden optischen Signals auf eine von einer Betriebswellenlänge verschiedene Ersatzwellenlänge auszuführen, wenn die wellenlängenvariable Teilnehmervorrichtung (20#1 - 20#N) das optische Signal für einen vorbestimmten Zeitraum oder länger nicht von einer wellenlängenvariablen Kommunikationsvorrichtung (10#1 - 10#M) empfängt, die durch logische Punkt-zu-Punkt-Kommunikation verbunden ist, und
die optische Verteilungsvorrichtung (100) in der Lage ist, eine zweite Schutzmaßnahme zum Umschalten des Verbindungsziels der wellenlängenvariablen Teilnehmervorrichtung (20#1 -20#M) auf die wellenlängenvariable Kommunikationsvorrichtung (10#1 - 10#N), die sich von der getrennten wellenlängenvariablen Kommunikationsvorrichtung (10#1 - 10#N) unterscheidet, auszuführen, wenn die Gruppe wellenlängenvariabler Teilnehmervorrichtungen (20#1 - 20#N) das optische Signal für einen vorbestimmten Zeitraum oder länger nicht von der Gruppe wellenlängenvariabler Kommunikationsvorrichtungen (10#1 - 10#N) empfängt, die durch logische Punkt-zu-Punkt-Kommunikation verbunden ist, und
die wellenlängenvariable Teilnehmervorrichtung (20#1 - 20#N), die wellenlängenvariable Kommunikationsvorrichtung (10#1 - 10#N) und die optische Verteilungsvorrichtung (100) ausgebildet sind, die erste Schutzmaßnahme und die zweite Schutzmaßnahme in beliebiger Reihenfolge auszuführen.

3. Optisches Kommunikationssystem nach Anspruch 1 oder Anspruch 2, wobei
die optische Verteilungsvorrichtung (100) in der Lage ist, eine dritte Schutzmaßnahme zum Umschalten des zu verwendenden Signalübertragungswegs (200) auszuführen, wenn die wellenlängenvariable Teilnehmervorrichtung (20) und die wellenlängenvariable Kommunikationsvorrichtung (10) getrennt sind.

4. Optisches Kommunikationssystem, umfassend:
eine Gruppe wellenlängenvariabler Kommunikationsvorrichtungen (10), einschließend eine Vielzahl wellenlängenvariabler Kommunikationsvorrichtungen (10#1 - 10#M), die ausgebildet sind, ein optisches Signal in Abwärtsrichtung zu übertragen, und in der Lage sind, eine Wellenlänge eines zu übertragenden optischen Signals zu ändern;
eine Gruppe wellenlängenvariabler Teilnehmervorrichtungen (20), einschließend eine Vielzahl wellenlängenvariabler Teilnehmervorrichtungen (20#1 - 20#N), die ausgebildet sind, ein optisches Signal in Aufwärtsrichtung zu übertragen, und in der Lage sind, eine Wellenlänge eines zu übertragenden und zu empfangenden optischen Signals zu ändern;
eine erste Wellenlängen-Routing-Vorrichtung (31), die mit jeder der wellenlängenvariablen Kommunikationsvorrichtungen (10#1 - 10#M) verbunden ist;
eine zweite Wellenlängen-Routing-Vorrichtung (32), die mit jeder der wellenlängenvariablen Teilnehmervorrichtungen (20#1 - 20#N) verbunden ist;
eine Vielzahl optischer Faserübertragungswege (50), einen normalen optischen Faserübertragungsweg (51) und einen redundanten optischen Faserübertragungsweg (52) einschließend und die erste Wellenlängen-Routing-Vorrichtung (31) und die zweite Wellenlängen-Routing-Vorrichtung (32) verbindend; und
eine Vielzahl von Signalübertragungswegen (200), die die erste Wellenlängen-Routing-Vorrichtung (31) und eine optische Verteilungsvorrichtung (100) verbinden, die zwischen der ersten Wellenlängen-Routing-Vorrichtung (31) und jeder der wellenlängenvariablen Kommunikationsvorrichtungen (10#1 - 10#M) vorgesehen ist, wobei die optische Verteilungsvorrichtung (100) ausgebildet ist, eine Verbindungsbeziehung zwischen den wellenlängenvariablen Kommunikationsvorrichtungen (10#1 - 10#M) und den Signalübertragungswegen (200) beliebig festzulegen und zu ändern, und
wobei
die erste Wellenlängen-Routing-Vorrichtung (31) ausgebildet ist, das optische Signal, das von einem Port auf der Seite der wellenlängenvariablen Teilnehmervorrichtung eingespeist wird, an einen Port auszugeben, der durch eine Kombination der Wellenlänge des optischen Signals und des Ports, in den das optische Signal eingespeist wird, eindeutig bestimmt ist,
die zweite Wellenlängen-Routing-Vorrichtung (32) ausgebildet ist, das optische Signal, das von einem Port auf der Seite der wellenlängenvariablen Kommunikationsvorrichtung eingespeist wird, an einen Port auszugeben, der durch eine Kombination der Wellenlänge des optischen Signals und des Ports, in den das optische Signal eingespeist wird, eindeutig bestimmt ist,
die wellenlängenvariablen Teilnehmervorrichtungen (20#1 - 20#N) und die Gruppe wellenlängenvariabler Kommunikationsvorrichtungen (10) in der Lage sind, eine erste Schutzmaßnahme zum Umschalten der Wellenlänge des jeweiligen zu übertragenden und zu empfangenden optischen Signals auf eine von einer Betriebswellenlänge verschiedene Ersatzwellenlänge auszuführen, wenn die wellenlängenvariable Teilnehmervorrichtung (20#1 - 20#N) das optische Signal für einen vorbestimmten Zeitraum oder länger nicht von einer wellenlängenvariablen Kommunikationsvorrichtung (10#1 - 10#M) empfängt, die durch logische Punkt-zu-Punkt-Kommunikation verbunden ist,
die optische Verteilungsvorrichtung (100) in der Lage ist, eine zweite Schutzmaßnahme zum Umschalten des Verbindungsziels der wellenlängenvariablen Teilnehmervorrichtung (20#1 -20#M) auf die wellenlängenvariable Kommunikationsvorrichtung (10#1 - 10#N) auszuführen, die sich von der getrennten wellenlängenvariablen Kommunikationsvorrichtung (10#1 -10#N) unterscheidet, wenn die Gruppe wellenlängenvariabler Teilnehmervorrichtungen (20#1 - 20#N) das optische Signal für einen vorbestimmten Zeitraum oder länger nicht von der Gruppe wellenlängenvariabler Kommunikationsvorrichtungen (10#1 - 10#N) empfängt, die durch logische Punkt-zu-Punkt-Kommunikation verbunden ist, und
die wellenlängenvariable Teilnehmervorrichtung (20#1 - 20#N), die wellenlängenvariable Kommunikationsvorrichtung (10#1 - 10#N) und die optische Verteilungsvorrichtung (100) ausgebildet sind, die erste Schutzmaßnahme und die zweite Schutzmaßnahme in beliebiger Reihenfolge auszuführen.

5. Schutzverfahren für ein optisches Kommunikationssystem nach Anspruch 1, einen ersten Schritt und einen zweiten Schritt umfassend, wobei
der erste Schritt ein Schritt ist, in dem die wellenlängenvariable Teilnehmervorrichtung (20) die Wellenlänge des zu übertragenden und zu empfangenden optischen Signals auf eine von einer Betriebswellenlänge verschiedene Ersatzwellenlänge umschaltet, wenn die Gruppe wellenlängenvariabler Teilnehmervorrichtungen (20) und die Gruppe wellenlängenvariabler Kommunikationsvorrichtungen (10) getrennt sind, wobei die Ersatzwellenlänge im Voraus mitgeteilt oder aus Ersatzwellenlängeninformationen erkannt wird, die auf einem Wellenlängenkanal übertragen werden,
der zweite Schritt ein Schritt ist, in dem die optische Verteilungsvorrichtung (100) den normalen optischen Faserübertragungsweg (51) auf den redundanten optischen Faserübertragungsweg (52) umschaltet, wenn die Gruppe wellenlängenvariabler Teilnehmervorrichtungen (20) und die Gruppe wellenlängenvariabler Kommunikationsvorrichtungen (10) getrennt sind,
der erste Schritt und der zweite Schritt in beliebiger Reihenfolge ausgeführt werden.

6. Schutzverfahren für ein optisches Kommunikationssystem nach Anspruch 2, einen ersten Schritt und einen zweiten Schritt umfassend, wobei
der erste Schritt ein Schritt ist, in dem die Gruppe wellenlängenvariabler Teilnehmervorrichtungen (20) die Wellenlänge des zu übertragenden und zu empfangenden optischen Signals auf eine von einer Betriebswellenlänge verschiedene Ersatzwellenlänge umschaltet, wenn die Gruppe wellenlängenvariabler Teilnehmervorrichtungen (20) und die Gruppe wellenlängenvariabler Kommunikationsvorrichtungen (10) getrennt sind, wobei die Ersatzwellenlänge im Voraus mitgeteilt oder aus Ersatzwellenlängeninformationen erkannt wird, die auf einem Wellenlängenkanal übertragen werden,
der zweite Schritt ein Schritt ist, in dem die optische Verteilungsvorrichtung (100) das Verbindungsziel der wellenlängenvariablen Teilnehmervorrichtung (20#1 - 20#M) auf die wellenlängenvariable Kommunikationsvorrichtung (10#1 -10#N) umschaltet, die sich von der getrennten wellenlängenvariablen Kommunikationsvorrichtung (10#1 - 10#N) unterscheidet, wenn die Gruppe wellenlängenvariabler Teilnehmervorrichtungen (20) und die Gruppe wellenlängenvariabler Kommunikationsvorrichtungen (10) getrennt sind,
der erste Schritt und der zweite Schritt in beliebiger Reihenfolge ausgeführt werden.

7. Schutzverfahren für das optische Kommunikationssystem nach Anspruch 5 oder Anspruch 6, weiter umfassend einen dritten Schritt, wobei der dritte Schritt ein Schritt ist, in dem die optische Verteilungsvorrichtung (100) den zu verwendenden Signalübertragungsweg (200) umschaltet, wenn die wellenlängenvariable Teilnehmervorrichtung (20) und die wellenlängenvariable Kommunikationsvorrichtung (10) getrennt sind,
der erste Schritt, der zweite Schritt und der dritte Schritt in beliebiger Reihenfolge ausgeführt werden.

8. Schutzverfahren für ein optisches Kommunikationssystem nach Anspruch 4, einen ersten Schritt und einen zweiten Schritt umfassend, wobei
der erste Schritt ein Schritt ist, in dem die Gruppe wellenlängenvariabler Teilnehmervorrichtungen (20) und die Gruppe wellenlängenvariabler Kommunikationsvorrichtungen (10) die Wellenlänge des jeweiligen zu übertragenden und zu empfangenden optischen Signals auf eine von einer Betriebswellenlänge verschiedene Ersatzwellenlänge umschalten, wenn die Gruppe wellenlängenvariabler Teilnehmervorrichtungen (20) und die Gruppe wellenlängenvariabler Kommunikationsvorrichtungen (10) getrennt sind, wobei die Ersatzwellenlänge im Voraus mitgeteilt wird oder aus Ersatzwellenlängeninformationen erkannt wird, die auf einem Wellenlängenkanal übertragen werden,
der zweite Schritt ein Schritt ist, in dem die optische Verteilungsvorrichtung (100) das Verbindungsziel der wellenlängenvariablen Teilnehmervorrichtung (20#1 - 20#M) auf die wellenlängenvariable Kommunikationsvorrichtung (10#1 -10#N) umschaltet, die sich von der getrennten wellenlängenvariablen Kommunikationsvorrichtung (10#1 -10#N) unterscheidet, wenn die Gruppe wellenlängenvariabler Teilnehmervorrichtungen (20) und die Gruppe wellenlängenvariabler Kommunikationsvorrichtungen (10) getrennt sind,
der erste Schritt und der zweite Schritt in beliebiger Reihenfolge ausgeführt werden.

## Revendications

1. Système de communication optique comprenant :
un groupe (10) de dispositifs de communication à longueur d'onde variable, incluant une pluralité de dispositifs de communication (10#1 - 10#M) à longueur d'onde variable configurés pour transmettre un signal optique en aval et aptes à modifier une longueur d'onde du signal optique à transmettre ;
un groupe (20) de dispositifs d'abonné à longueur d'onde variable, incluant une pluralité de dispositifs d'abonné (20#1 - 20#N) à longueur d'onde variable configurés pour transmettre un signal optique en amont et aptes à modifier une longueur d'onde du signal optique à transmettre et à recevoir ;
un dispositif (30) de routage de longueur d'onde, relié à chacun des dispositifs de communication (10#1 - 10#M) à longueur d'onde variable ;
un dispositif (40) de branchement optique, relié à chacun des dispositifs d'abonné (20#1 - 20#N) à longueur d'onde variable et à une pluralité de chemins (50) de transmission par fibres optiques pour brancher, indépendamment de la longueur d'onde, une lumière introduite depuis un dispositif d'abonné à longueur d'onde variable vers la pluralité de chemins (50) de transmission par fibres optiques et pour brancher, indépendamment de la longueur d'onde, une lumière introduite depuis la pluralité de chemins (50) de transmission par fibres optiques vers chacun des dispositifs d'abonné (20#1 - 20#N) à longueur d'onde variable ;
la pluralité de chemins (50) de transmission par fibres optiques incluant un chemin normal (51) de transmission par fibres optiques et un chemin redondant (52) de transmission par fibres optiques et reliant le dispositif (40) de branchement optique à un dispositif (100) de distribution optique ;
une pluralité de chemins (200) de transmission de signal reliant le dispositif (30) de routage de longueur d'onde au dispositif (100) de distribution optique, le dispositif (100) de distribution optique étant configuré pour définir et changer arbitrairement une relation de connexion entre les chemins (50) de transmission par fibres optiques et les chemins (200) de transmission de signal ; et
dans lequel
le dispositif (30) de routage de longueur d'onde est configuré pour délivrer en sortie un signal optique introduit depuis un port du côté du dispositif d'abonné à longueur d'onde variable vers un port déterminé de manière unique par une combinaison de la longueur d'onde du signal optique et du port auquel le signal optique est introduit, et dans lequel chaque dispositif d'abonné à longueur d'onde variable est configuré pour définir un canal de longueur d'onde comme une longueur d'onde de fonctionnement, réalisant ainsi, de manière logique, une communication point à point avec un dispositif de communication à longueur d'onde variable,
les dispositifs d'abonné (20#1 - 20#N) à longueur d'onde variable sont aptes à mettre en œuvre une première protection pour commuter la longueur d'onde du signal optique à transmettre et à recevoir vers une longueur d'onde de rechange différente d'une longueur d'onde de fonctionnement, lorsque le dispositif d'abonné (20#1 - 20#N) à longueur d'onde variable ne reçoit pas le signal optique pendant une période de temps prédéterminée, ou une période de temps plus longue que cette période, depuis un dispositif de communication (10#1 - 10#M) à longueur d'onde variable relié par une communication logique point à point, et
le dispositif (100) de distribution optique est apte à mettre en œuvre une deuxième protection pour commuter le chemin normal (51) de transmission par fibres optiques vers le chemin redondant (52) de transmission par fibres optiques par commutation de ports, lorsque le dispositif d'abonné (20#1 - 20#N) à longueur d'onde variable ne reçoit pas le signal optique pendant une période de temps prédéterminée, ou une période de temps plus longue que cette période, depuis le dispositif de communication (10#1 - 10#M) à longueur d'onde variable relié par une communication logique point à point, et
le dispositif d'abonné (20#1 - 20#N) à longueur d'onde variable, le dispositif de communication (10#1 - 10#M) à longueur d'onde variable et le dispositif (100) de distribution optique sont configurés pour mettre en œuvre la première protection et la deuxième protection dans un ordre arbitraire.

2. Système de communication optique comprenant :
un groupe (10) de dispositifs de communication à longueur d'onde variable, incluant une pluralité de dispositifs de communication (10#1 - 10#M) à longueur d'onde variable configurés pour transmettre un signal optique en aval et aptes à changer une longueur d'onde d'un signal optique à transmettre ;
un groupe (20) de dispositifs d'abonné à longueur d'onde variable, incluant une pluralité de dispositifs d'abonné (20#1 - 20#N) à longueur d'onde variable configurés pour transmettre un signal optique en amont et aptes à changer une longueur d'onde d'un signal optique à transmettre et à recevoir ;
un dispositif (100) de distribution optique, relié à chacun des dispositifs de communication (10#1 - 10#M) à longueur d'onde variable ;
un dispositif (40) de branchement optique, relié à chacun des dispositifs d'abonné (20#1 - 20#N) à longueur d'onde variable et à une pluralité de chemins (50) de transmission par fibres optiques, pour brancher, indépendamment de la longueur d'onde, une lumière introduite depuis un dispositif d'abonné à longueur d'onde variable vers la pluralité de chemins (50) de transmission par fibres optiques et pour brancher, indépendamment de la longueur d'onde, une lumière introduite depuis la pluralité de chemins (50) de transmission par fibres optiques vers chacun des dispositifs d'abonné (20#1 - 20#N) à longueur d'onde variable ;
la pluralité de chemins (50) de transmission par fibres optiques incluant un chemin normal (51) de transmission par fibres optiques et un chemin redondant (52) de transmission par fibres optiques et reliant le dispositif (40) de branchement optique à un dispositif (30) de routage de longueur d'onde ;
une pluralité de chemins (200) de transmission de signal reliant le dispositif (30) de routage de longueur d'onde et le dispositif (100) de distribution optique, le dispositif (100) de distribution optique étant configuré pour définir et changer arbitrairement une relation de connexion entre les dispositifs de communication (10#1 - 10#M) à longueur d'onde variable et les chemins (200) de transmission de signal, et
dans lequel
le dispositif (30) de routage de longueur d'onde est configuré pour délivrer en sortie le signal optique introduit depuis un port du côté du dispositif d'abonné à longueur d'onde variable vers un port déterminé de manière unique par une combinaison de la longueur d'onde du signal optique et du port auquel le signal optique est introduit, et dans lequel chaque dispositif d'abonné à longueur d'onde variable est configuré pour définir un canal de longueur d'onde comme une longueur d'onde de fonctionnement, réalisant ainsi, de manière logique, une communication point à point avec un dispositif de communication à longueur d'onde variable,
les dispositifs d'abonné (20#1 - 20#N) à longueur d'onde variable sont aptes à mettre en œuvre une première protection pour commuter la longueur d'onde du signal optique à transmettre et à recevoir vers une longueur d'onde de rechange différente d'une longueur d'onde de fonctionnement lorsque le dispositif d'abonné (20#1 - 20#N) à longueur d'onde variable ne reçoit pas le signal optique pendant une période de temps prédéterminée, ou une période de temps plus longue que cette période, depuis un dispositif de communication (10#1 - 10#M) à longueur d'onde variable relié par une communication logique point à point, et
le dispositif (100) de distribution optique est apte à mettre en œuvre une deuxième protection pour commuter la destination de connexion du dispositif d'abonné (20#1 -20#M) à longueur d'onde variable vers le dispositif de communication (10#1 - 10#N) à longueur d'onde variable différent du dispositif de communication (10#1 - 10#N) à longueur d'onde variable déconnecté, lorsque le groupe de dispositifs d'abonné (20#1 - 20#N) à longueur d'onde variable ne reçoit pas le signal optique pendant une période de temps prédéterminée, ou une période de temps plus longue que cette période, depuis le groupe de dispositifs de communication (10#1 - 10#N) à longueur d'onde variable relié par une communication logique point à point, et
le dispositif d'abonné (20#1 - 20#N) à longueur d'onde variable, le dispositif de communication (10#1 - 10#N) à longueur d'onde variable et le dispositif (100) de distribution optique sont configurés pour mettre en œuvre la première protection et la deuxième protection dans un ordre arbitraire.

3. Système de communication optique selon la revendication 1 ou la revendication 2, dans lequel
le dispositif (100) de distribution optique est apte à mettre en œuvre une troisième protection pour commuter le chemin (200) de transmission de signal à utiliser lorsque le dispositif d'abonné (20) à longueur d'onde variable et le dispositif de communication (10) à longueur d'onde variable sont déconnectés.

4. Système de communication optique comprenant :
un groupe (10) de dispositifs de communication à longueur d'onde variable incluant une pluralité de dispositifs de communication (10#1 - 10#M) à longueur d'onde variable configurés pour transmettre un signal optique en aval et aptes à changer une longueur d'onde d'un signal optique à transmettre ;
un groupe (20) de dispositifs d'abonné à longueur d'onde variable incluant une pluralité de dispositifs d'abonné (20#1 - 20#N) à longueur d'onde variable configurés pour transmettre un signal optique en amont et aptes à changer une longueur d'onde d'un signal optique à transmettre et à recevoir ;
un premier dispositif (31) de routage de longueur d'onde relié à chacun des dispositifs de communication (10#1 - 10#M) à longueur d'onde variable ;
un deuxième dispositif (32) de routage de longueur d'onde relié à chacun des dispositifs d'abonné (20#1 - 20#N) à longueur d'onde variable ;
une pluralité de chemins (50) de transmission par fibres optiques incluant un chemin normal (51) de transmission par fibres optiques et un chemin redondant (52) de transmission par fibres optiques et reliant le premier dispositif (31) de routage de longueur d'onde et le deuxième dispositif (32) de routage de longueur d'onde ; et
une pluralité de chemins (200) de transmission de signal reliant le premier dispositif (31) de routage de longueur d'onde et un dispositif (100) de distribution optique disposé entre le premier dispositif (31) de routage de longueur d'onde et chacun des dispositifs de communication (10#1 - 10#M) à longueur d'onde variable, le dispositif (100) de distribution optique étant configuré pour définir et changer arbitrairement une relation de connexion entre les dispositifs de communication (10#1 - 10#M) à longueur d'onde variable et les chemins (200) de transmission de signal, et
dans lequel
le premier dispositif (31) de routage de longueur d'onde est configuré pour délivrer en sortie le signal optique introduit depuis un port du côté du dispositif d'abonné à longueur d'onde variable vers un port déterminé de manière unique par une combinaison de la longueur d'onde du signal optique et du port auquel le signal optique est introduit,
le deuxième dispositif (32) de routage de longueur d'onde est configuré pour délivrer en sortie le signal optique introduit depuis un port du côté du dispositif de communication à longueur d'onde variable vers un port déterminé de manière unique par une combinaison de la longueur d'onde du signal optique et du port auquel le signal optique est introduit,
les dispositifs d'abonné (20#1 - 20#N) à longueur d'onde variable et le groupe (10) de dispositifs de communication à longueur d'onde variable sont aptes à mettre en œuvre une première protection pour commuter la longueur d'onde du signal optique respectif à transmettre et à recevoir vers une longueur d'onde de rechange différente d'une longueur d'onde de fonctionnement, lorsque le dispositif d'abonné (20#1 - 20#N) à longueur d'onde variable ne reçoit pas le signal optique pendant une période de temps prédéterminée, ou une période de temps plus longue que cette période, depuis un dispositif de communication (10#1 - 10#M) à longueur d'onde variable relié par une communication logique point à point,
le dispositif (100) de distribution optique est apte à mettre en œuvre une deuxième protection pour commuter la destination de connexion du dispositif d'abonné (20#1 -20#M) à longueur d'onde variable vers le dispositif de communication (10#1 - 10#N) à longueur d'onde variable différent du dispositif de communication (10#1 - 10#N) à longueur d'onde variable déconnecté, lorsque le groupe de dispositifs d'abonné (20#1 - 20#N) à longueur d'onde variable ne reçoit pas le signal optique pendant une période de temps prédéterminée, ou une période de temps plus longue que cette période, depuis le groupe de dispositifs de communication (10#1 - 10#N) à longueur d'onde variable relié par une communication logique point à point, et
le dispositif d'abonné (20#1 - 20#N) à longueur d'onde variable, le dispositif de communication (10#1 - 10#N) à longueur d'onde variable et le dispositif (100) de distribution optique sont configurés pour mettre en œuvre la première protection et la deuxième protection dans un ordre arbitraire.

5. Procédé de protection pour un système de communication optique selon la revendication 1, comprenant une première étape et une deuxième étape, dans lequel
la première étape est une étape dans laquelle le dispositif d'abonné (20) à longueur d'onde variable commute la longueur d'onde du signal optique à transmettre et à recevoir vers une longueur d'onde de rechange différente d'une longueur d'onde de fonctionnement lorsque le groupe (20) de dispositifs d'abonné à longueur d'onde variable et le groupe (10) de dispositifs de communication à longueur d'onde variable sont déconnectés, la longueur d'onde de rechange étant notifiée à l'avance ou reconnue à partir d'informations de longueur d'onde de rechange portées sur un canal de longueur d'onde,
la deuxième étape est une étape dans laquelle le dispositif (100) de distribution optique commute le chemin normal (51) de transmission par fibres optiques vers le chemin redondant (52) de transmission par fibres optiques, lorsque le groupe (20) de dispositifs d'abonné à longueur d'onde variable et le groupe (10) de dispositifs de communication à longueur d'onde variable sont déconnectés,
la première étape et la deuxième étape étant exécutées dans un ordre arbitraire.

6. Procédé de protection pour un système de communication optique selon la revendication 2 comprenant une première étape et une deuxième étape, dans lequel
la première étape est une étape dans laquelle le groupe (20) de dispositifs d'abonné à longueur d'onde variable commute la longueur d'onde du signal optique à transmettre et à recevoir vers une longueur d'onde de rechange différente d'une longueur d'onde de fonctionnement lorsque le groupe (20) de dispositifs d'abonné à longueur d'onde variable et le groupe (10) de dispositifs de communication à longueur d'onde variable sont déconnectés, la longueur d'onde de rechange étant notifiée à l'avance ou reconnue à partir d'informations de longueur d'onde de rechange portées sur un canal de longueur d'onde,
la deuxième étape est une étape dans laquelle le dispositif (100) de distribution optique commute la destination de connexion du dispositif d'abonné (20#1 -20#M) à longueur d'onde variable vers le dispositif de communication (10#1 -10#N) à longueur d'onde variable différent du dispositif de communication (10#1 - 10#N) à longueur d'onde variable déconnecté lorsque le groupe (20) de dispositifs d'abonné à longueur d'onde variable et le groupe (10) de dispositifs de communication à longueur d'onde variable sont déconnectés,
la première étape et la deuxième étape étant exécutées dans un ordre arbitraire.

7. Procédé de protection pour le système de communication optique selon la revendication 5 ou la revendication 6, comprenant en outre une troisième étape, la troisième étape étant une étape dans laquelle le dispositif (100) de distribution optique commute le chemin (200) de transmission de signal à utiliser lorsque le dispositif d'abonné (20) à longueur d'onde variable et le dispositif de communication (10) à longueur d'onde variable sont déconnectés,
la première étape, la deuxième étape et la troisième étape étant exécutées dans un ordre arbitraire.

8. Procédé de protection pour un système de communication optique selon la revendication 4, comprenant une première étape et une deuxième étape, dans lequel
la première étape est une étape dans laquelle le groupe (20) de dispositifs d'abonné à longueur d'onde variable et le groupe (10) de dispositifs de communication à longueur d'onde variable commutent la longueur d'onde du signal optique respectif à transmettre et à recevoir vers une longueur d'onde de rechange différente d'une longueur d'onde de fonctionnement lorsque le groupe (20) de dispositifs d'abonné à longueur d'onde variable et le groupe (10) de dispositifs de communication à longueur d'onde variable sont déconnectés, la longueur d'onde de rechange étant notifiée à l'avance ou reconnue à partir d'informations de longueur d'onde de rechange portées sur un canal de longueur d'onde,
la deuxième étape est une étape dans laquelle le dispositif (100) de distribution optique commute la destination de connexion du dispositif d'abonné (20#1 -20#M) à longueur d'onde variable vers le dispositif de communication (10#1 -10#N) à longueur d'onde variable différent du dispositif de communication (10#1 -10#N) à longueur d'onde variable déconnecté lorsque le groupe (20) de dispositifs d'abonné à longueur d'onde variable et le groupe (10) de dispositifs de communication à longueur d'onde variable sont déconnectés,
la première étape et la deuxième étape étant exécutées dans un ordre arbitraire.
